(19) Europäisches Patentamt
European Patent Office
Office européen des brevets

(11) **EP 3 584 079 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **19179974.1**

(22) Anmeldetag: **13.06.2019**

(51) Internationale Patentklassifikation (IPC):
**B32B 27/08** *(2006.01)* **B32B 27/18** *(2006.01)*
**B32B 27/20** *(2006.01)* **B32B 27/36** *(2006.01)*

(52) Gemeinsame Patentklassifikation (CPC):
**B32B 27/08; B32B 27/18; B32B 27/20; B32B 27/36;** B32B 2250/02; B32B 2250/03; B32B 2250/04; B32B 2250/05; B32B 2250/24; B32B 2250/244; B32B 2255/10; B32B 2255/26; B32B 2270/00; B32B 2307/306; B32B 2307/308; (Forts.)

(54) **THERMOFORMBARE, TRANSPARENTE PACKUNG AUS POLYESTER MIT EINER UNTER- UND EINER OBERFOLIE, VERFAHREN ZU IHRER HERSTELLUNG UND IHRE VERWENDUNG**

THERMOFORMABLE, TRANSPARENT POLYESTER PACKAGE WITH A TOP AND A BOTTOM FILM, METHOD FOR THEIR PREPARATION AND THEIR USE

EMBALLAGE TRANSPARENT THERMOFORMABLE DE POLYESTER DOTÉ D'UNE FEUILLE INFÉRIEURE ET D'UNE FEUILLE SUPÉRIEURE, SON PROCÉDÉ DE FABRICATION ET SON UTILISATION

(84) Benannte Vertragsstaaten:
**CZ DE FR GB LU PL**

(30) Priorität: **20.06.2018 DE 102018210041**
**07.12.2018 DE 102018221222**

(43) Veröffentlichungstag der Anmeldung:
**25.12.2019 Patentblatt 2019/52**

(73) Patentinhaber: **Mitsubishi Polyester Film GmbH**
**65203 Wiesbaden (DE)**

(72) Erfinder:
• **PEIFFER, Herbert**
**55126 Mainz (DE)**
• **JESBERGER, Martin**
**55128 Mainz (DE)**
• **BARTSCH, Stefan**
**55294 Bodenheim (DE)**
• **RENTZSCH, Tobias**
**61350 Bad Homburg (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**US-A1- 2005 287 382    US-A1- 2017 136 747**

(52) Gemeinsame Patentklassifikation (CPC): (Forts.)
B32B 2307/31; B32B 2307/4026; B32B 2307/406;
B32B 2307/412; B32B 2307/518; B32B 2307/558;
B32B 2307/702; B32B 2307/704; B32B 2307/71;
B32B 2307/72; B32B 2307/7244; B32B 2307/7246;
B32B 2307/738; B32B 2307/746; B32B 2439/70

**Beschreibung**

Die Erfindung betrifft eine transparente Packung enthaltend eine biaxial orientierte, thermoformbare Polyesterfolie als Unterfolie und eine biaxial orientierte, siegelfähige Polyesterfolie als Oberfolie. Die thermoformbare Unterfolie dient zur Aufnahme von Lebensmittel, z.B. Fleisch, Fisch oder Geflügel. Die Oberfolie dient zur Abdeckelung der Unterfolie und wird auf diese mittels Wärme fest aufgesiegelt. Die Packung weist ein self-venting (Selbst-Belüftung/Öffnung) auf, wenn Sie z.B. im Ofen, in der Mikrowelle oder im Kontaktgrill bei hoher Temperatur verarbeitet (gegart) wird. Die Erfindung betrifft weiterhin ein Verfahren zur Herstellung der Packung und ihre Verwendung.

Transparente Menüschalen, die aus thermoformbarem Polyester, wie z.B. a-PET oder modifiziertem boPET, unter Anwendung von Vakuum hergestellt und nach Befüllung mittels Lebensmittel mit einer auf den Rand der Menüschale unter Temperatureinwirkung aufgesiegelten Folie verschlossen werden, finden ihren Einsatz insbesondere bei Fleisch, Fisch, Geflügel und trockenen (Fertig-) Produkten wie Sandwiches, Burger oder Wraps. Das Zubereiten der Produkte in solchen Packungen wird als sauber und hygienisch angesehen und erfreut sich deshalb einer großen Beliebtheit.

Eine wirtschaftliche Methode, hygienische Packungen für die Verarbeitung von Fleisch, Fisch oder Geflügel herzustellen, besteht in der Anwendung von Vakuumverfahren, z.B. mittels Multivac-Maschinen. Hierbei wird die fertige Packung allgemein wie folgt hergestellt: Die Folie für die Herstellung der Menüschale - auch mit Unterfolie bezeichnet - wird als Rolle in den vorderen Bereich der Maschine eingespannt. Über eine oder mehrere Vakuumkammern wird die Folie bis zu einer gewünschten Tiefe durch Anwendung von Temperatur und Vakuum thermogeformt (auch mit Tiefziehen bezeichnet). Nach dem Stand der Technik (siehe z.B. die EP 1 697 129 B1) lassen sich z.B. bei der Verwendung von Laminaten aus Polyester und Polyamid Tiefen bis zu ca. 70 mm realisieren. Nach dem Thermoformen erfolgt das Einlegen des Lebensmittelproduktes in die Menüschale, zumeist händisch. Über eine weitere Rolle wird die Deckel- oder Oberfolie der Menüschale zugeführt und auf deren Rand unter Anwendung von Temperatur und Druck fest versiegelt. Dieser Verfahrensschritt geschieht zumeist wiederum unter Vakuum, in dem sich die gesamte Packung befindet. Danach erfolgt die Konfektionierung in einzelne Packungen, verbunden mit weiteren nachfolgenden Einzeloperationen, wie die Bedruckung oder die Etikettierung der Verpackung.

Die Packungen werden eingefroren und gelangen in den Handel. Beim Verbraucher wird die Packung aufgetaut und im Backofen bei Temperaturen bis zu 220 °C über eine bestimmte Zeit (etwa 30 min bis zu zwei Stunden) gegart. Die Packung wird dazu verschlossen in den vorgeheizten Backofen gelegt (cook-in), wo sie sich - idealerweise nach 5 bis 10 min Verweilzeit - selbsttätig in der Siegelnaht öffnet (sogenanntes self-venting).

Bei der Entwicklung von neuen Packungen mit verbesserter Funktionalität oder modifiziertem Design ist das self-venting ein Muss. Durch die selbsttätige Öffnung der Siegelnaht im Wesentlichen infolge des in der Packung aufgebauten Dampfdruckes entweicht der Wasserdampf aus der Packung und das Produkt wird - wie vom Verbraucher gewünscht - knusprig braun. Nach Ablauf der Garzeit wird die Oberfolie im heißen Zustand von der Menüschale - ohne dabei zerstört zu werden - abgezogen und der Inhalt der Packung steht für den Verzehr zur Verfügung.

Die aus beiden Folien hergestellte erfindungsgemäße Packung zeigt beim Garen das gewünschte self-venting. Das self-venting wird erzielt, wenn die Siegeleigenschaften der Oberfolie auf die Unterfolie entsprechend abgestimmt sind.

Vom Markt werden hohe optische Anforderungen an die beiden Folien der Packung gestellt, insbesondere an die Trübung, die Clarity und den Glanz. Damit der Packungsinhalt (entspricht der Größe des Lebensmittels) gut zu erkennen ist, sollte die Trübung der Packung < 5 % und die Clarity der Packung > 85 % sein. Außerdem soll die Packung soll den Betrachter optisch ansprechen. Dazu werden hohe Glanzwerte der Packung angestrebt.

Daneben wird von der Packung eine hohe Durchstoßfestigkeit gefordert, damit sie den Transport ohne Beschädigungen überstehen kann.

**Stand der Technik**

Packungen aus thermoformbarer Unterfolie und (siegelbarer) Oberfolie sind bekannt.

In der US 2005/287382 A1 wird ein transparenter, biaxial orientierter Polyesterfilm beschrieben, der Poly (m-xyleneadipamid) umfasst und der mindestens einseitig mit einer haftungsfördernden Schicht aus einem hydrolysierten aminofunktionellen Silan beschichtet ist. Die adhäsionsfördernde Beschichtung macht den Film für eine nachfolgende Extrusionsbeschichtung mit anderen Polymeren (z. B. Polyolefinen) empfänglich.

In der EP 1 697 129 B1 wird ein thermoformbares Folienlaminat beschrieben, das eine thermoformbare Folienschicht (a), eine Strukturfolienschicht (b), eine heißsiegelfähige Schicht (c) und gegebenenfalls eine Barriereschicht (d) umfasst. An der ersten Oberfläche der thermoformbaren Folienschicht (a) grenzt die Strukturfolienschicht (b) an und an der gegenüberliegenden, zur Packungsinnenseite gerichteten, zweiten Oberfläche, befindet sich die heißsiegelfähige Schicht (c). Die thermoformbare Folienschicht (a) weist eine Polymerzusammensetzung auf, die mindestens 80 Gew.-% Polyethylenterephthalat umfasst. Die Strukturfolienschicht (b) kann eine Reihe von Polymeren umfassen, vorzugsweise enthält sie ein Polyamid. Die heißsiegelfähige Schicht (c) kann ebenfalls eine Reihe verschiedener Polymere umfassen, vorzugsweise enthält sie einen amorphen Polyester. Das Laminat ist für die eingangs genannte Anwendung geeignet, es ist aber verbesserungswürdig in der Thermoformbarkeit, der Durchstoßfestigkeit, vor allem aber verbesserungswürdig in den optischen Eigenschaften, wie Trübung, Clarity und Glanz.

In der EP 1 945 512 B1 wird ein Verfahren zum Verpacken von Fisch oder Fleisch beschrieben, das im Wesentlichen die Schritte umfasst, die eingangs in der vorliegenden Anmeldung genannt wurden: (i) Bereitstellen eines thermoformbaren polymeren Aufnahmefilms (= Unterfolie) und eines polymeren Abdeckfilms (= Oberfolie). Der Aufnahmefilm besteht aus einem Einzelschicht-Polyester- oder Polyamidsubstrat und der Abdeckfilm ist vorzugsweise aus Polyesterpolymeren aufgebaut. Zumindest eine der beiden Oberflächen des Aufnahme- und des Abdeckfilms hat eine heißsiegelfähige Oberfläche, (ii) Bereitstellen eines erhöhten äußeren Teils und eines vertieften mittleren Teils in dem Aufnahmefilm durch Thermoformen. (iii) Anordnen einer Portion Fleisch oder Fisch auf der inneren (= ersten) Oberfläche des Aufnahmefilms. (iv) Anordnen des Abdeckfilms über der Portion Fleisch oder Fisch, so dass die innere (= erste) Oberfläche des Abdeckfilms der inneren Oberfläche des Aufnahmefilms zugewandt ist. (v) In Kontaktbringen der Randabschnitte der ersten Oberfläche des Aufnahmefilms und der ersten Oberfläche des Abdeckfilms und Bilden einer Heißsiegelverbindung dazwischen und (vi) gegebenenfalls Einfrieren des verpackten Fleischs oder Fischs. Das Verfahren ist für die eingangs genannte Anwendung geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Trübung, Clarity und Glanz).

Ein weiteres Beispiel bildet die EP 0 415 383, die die Nutzung einer Polyesterfolie mit einem Schmelzpunkt von 210 bis 245°C, einer planaren Orientierung von 0,10 bis 0,16, einem Schrumpf von kleiner/gleich 10 % und einer Dichte von weniger als 1,385 g/cm$^3$ beschreibt. Die Folie zeichnet sich durch eine gute Verformbarkeit und eine gute Haftung auf Metall aus und soll z.B. in der Dosenlaminierung eingesetzt werden. Das Verfahren ist für die eingangs genannte Anwendung geeignet; die in der EP 0 415 383 näher beschriebenen Folien sind aber verbesserungswürdig in der Optik (Trübung, Glanz und Clarity).

**Aufgabenstellung**

Aufgabe der vorliegenden Erfindung war es, eine Verpackung aus Polyester für die eingangs genannte Anwendung zur Verfügung zu stellen, die sich durch eine gute Thermoformbarkeit (= Tiefziehfähigkeit) der Unterfolie und durch hervorragende Siegeleigenschaften der Oberfolie zur Unterfolie auszeichnet. Darüber hinaus soll die Packung gute self-venting Eigenschaften aufweisen und eine besonders brillante Optik zeigen. Sie soll die Nachteile von Folien nach dem Stand der Technik nicht mehr aufweisen und sich insbesondere durch die folgenden Punkte/Eigenschaften auszeichnen

- Die Unterfolie der Verpackung soll eine so gute Thermoformbarkeit aufweisen, dass hiermit am Markt übliche Fleisch-, Geflügel oder Fischstücke oder trockene Produkte, wie z.B. Sandwiches, problemlos im gewünschten Verpackungs-Design eingepackt werden können. Entsprechend den Marktanforderungen soll die Unterfolie mindestens bis zu einer Tiefe von 70 mm thermogeformt werden können.
- Daneben sollen beide Folien, insbesondere aber die Unterfolie, sehr gute mechanische Eigenschaften aufweisen. Die für die vorliegende Anwendung besonders wichtige mechanische Eigenschaft der Unterfolie ist die Durchstoßfestigkeit. Sie soll derart hoch sein, dass die Packung, ohne Schaden zu nehmen, transportiert und gelagert werden kann.
- Die Packung soll zwischen Unter- und Oberfolie derart versiegelt sein, dass sie u.a. ein Vorgaren im Wasserbad (Temperatur Wasserbad bis zu 85 °C, Verweilzeit Packung im Wasserbad bis zu 6 Stunden) übersteht, ohne dabei in den Siegelnähten aufzugehen
- Beim Garprozess, z.B. in einem konventionellen Backofen mit einer Backofentemperatur bis zu 220 °C, soll die Packung self-venting zeigen, wobei das self-venting idealer Weise nach einer Verweildauer von ca. 5 bis 15 min im Ofen auftreten soll
- Die Packung soll sich durch eine brillante Optik auszeichnen. Dies betrifft die Trübung, insbesondere aber die Clarity von beiden Folien der Packung. Von beiden Folien wird gewünscht, dass ihre Trübung kleiner als 5 % und ihre Clarity größer als 85 % ist. Der Kunde wünscht beispielsweise, dass er sich beim Kauf der Ware ein klares und detailliertes Bild vom Packungsinhalt machen kann. Außerdem soll die Packung den Betrachter durch einen möglichst hohen Glanz optisch gut ansprechen,
- Weiterhin wird gefordert, dass die Packung den Garprozess derart übersteht, dass sie nicht weiß eintrübt, z.B. durch eine Kristallisation der Folien beim Garprozess.
- Daneben soll die Packung gute Barriereeigenschaften aufweisen, insbesondere gegen Sauerstoff und Wasserdampf. Als Vergleichsmaßstab dienen die Permeationswerte von üblichen, nach dem Stand der Technik hergestellten, biaxial orientierten PET-Folien (siehe z.B. http://www.bfr.bund.de/cm/343/barrierewirkung-ausgewaehlterkunststoffmaterialien-gegen-die-migration-von-mineraloelfraktionen-inlebensmittel.pdf), die nicht/bzw. nur marginal ( < 5 %) überschritten werden dürfen. Die Permeationswerte von 100 $\mu$m dicken PET-Folien betragen: OTR = 10 cm$^3$/(m$^2$ d bar) und die WVTR = 2 g/(m$^2$ d).

- Die beiden hochtransparenten und daher wenig gefüllten Folien (Konzentration Antiblockmittel, siehe weiter hinten) der Packung sollen sich gut wickeln und gut verarbeiten lassen. Beim Auf- und Abwickeln der Folien dürfen die einzelnen Folienlagen nicht aneinander haften, auch nicht bei erhöhter Temperatur, z.B. 50 oder 60 °C. Eine erhöhte Haftung zwischen den einzelnen Folienlagen würde die Abwicklung der Folien erschweren oder gar unmöglich machen.
- Die Packung soll sich wirtschaftlich herstellen lassen. Dies bedeutet beispielsweise, dass zur Herstellung von Unter- und Oberfolie in der Industrie übliche Verfahren eingesetzt werden können.

**Lösung der Aufgabe**

Gelöst wird die Aufgabe durch die Bereitstellung einer transparenten Verpackung für die Vakuumverformung. Sie umfasst eine biaxial orientierte, thermoformbare Polyesterfolie als Unterfolie (A) und eine biaxial orientierte Polyesterfolie als Oberfolie (B), die zur Unterfolie (A) heißsiegelbar ist.

I Die Unterfolie (A) ist eine Folie, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Folie durch Koextrusion, biaxiales Strecken der Unterfolie (A) in Längsrichtung bei einer Temperatur zwischen 70 ° und 100 °C mit einem Längsstreckverhältnis von 2,2:1 bis 3,8:1, und in Querrichtung bei einer Temperatur zwischen 90 ° und 140 °C mit einem Querstreckverhältnis von 2,2:1 bis 3,8:1, sowie Thermofixierung für 5 bis 25 s bei 175 ° bis 220 °C hergestellt wird, und wobei die Unterfolie

(a) einen Flächen-E-Modul im Bereich von 4500 bis 6400 N/mm$^2$, bestimmt gemäß Formel (I)

$$E_{Fläche} = \sqrt{\left(E_{MD}{}^2 + E_{TD}{}^2\right)} \ \text{(I)},$$

wobei

$E_{MD}$ der E-Modul der Folie, gemessen in Längsrichtung der Maschine ist und

$E_{TD}$ der E-Modul der Folie, gemessen in Querrichtung der Maschine ist

(b) eine Summe der Festigkeiten ($\sigma_5$-Wert) in Längsrichtung und in Querrichtung im Bereich von 170 bis 220 MPa, bestimmt gemäß DIN EN ISO 527-1 und -3
(c) eine Dichte von kleiner 1390 kg/m$^3$, bestimmt gemäß ASTM-D 1505-68, Methode C
(d) eine Trübung von weniger als 2,0 %, bestimmt gemäß ASTM-D 1003-61, Methode A, und eine Clarity von mindestens 85 %, bestimmt gemäß ASTM-D 1003, und
(e) eine Dicke im Bereich von 50 bis 300 $\mu$m, aufweist.

II Die Oberfolie (B) ist eine Folie, die eine Basisschicht (B") und eine gegenüber der Unterfolie (A) heißsiegelbare Deckschicht (B') enthält, wobei die heißsiegelbare Deckschicht (B') zu mindestens 90 Gew.-% einen thermoplastischen Polyester umfasst, der zu

a) 85 bis 97 Gew.-% aus amorphem Polyester I und zu
b) 3 bis 15 Gew.-% aus teilkristallinem Polyester II aufgebaut ist.
c) Die heißsiegelbare Deckschicht (B') 0,04 bis 0,35 Gew.-% anorganische und/oder organische Partikel mit einem mittleren Durchmesser $d_{50}$ von 1,5 bis 5,0 $\mu$m enthält, wobei das Verhältnis aus Teilchengröße $d_{50}$ und Schichtdicke der Deckschicht (B') größer 1,0 ist
d) die Schichtdicke der Deckschicht (B') 1,5 bis 4,0 $\mu$m beträgt
e) die Folie eine Trübung von weniger als 5,0 %, bestimmt gemäß ASTM-D 1003-61, Methode A, und eine Clarity von mindestens 85 %, bestimmt gemäß ASTM-D 1003, besitzt
f) eine Siegelnahtfestigkeit zu sich selbst (= Finsiegelung) und zur Unterfolie (A) aufweist, die im Bereich von 2 bis 7 N/15 mm, bestimmt gemäß DIN 55529, liegt und
g) eine Dicke im Bereich von 20 bis 125 $\mu$m, aufweist.

Im Vorstehenden wie im Folgenden bezieht sich Gew.-%, sofern nichts anderes erwähnt, immer auf die Masse der jeweiligen Schicht oder das jeweilige System, in dessen Zusammenhang die Angabe genannt ist.

## (I) Unterfolie (A) = Thermoformbare Polyesterfolie

Die Packung nach der vorliegenden Erfindung enthält eine thermoformbare Unterfolie (A), die durch eine transparente, biaxial orientierte, einschichtige Polyesterfolie (A) oder durch eine transparente, biaxial orientierte, mehrschichtige koextrudierte Polyesterfolie, z.B. (A′ A″ A‴) gebildet wird.

Die Unterfolie (A) umfasst zu mindestens 85 Gew.-% einen thermoplastischen Copolyester. Erfindungsgemäß handelt es sich dabei um einen Copolyester, dessen Dicarbonsäure-Komponenten zu 85 bis 94 Mol.-% auf Terephthalsäure abgeleitete Einheiten und zu 6 bis 15 Mol.-% auf Isophthalsäure abgeleitete Einheiten zurückzuführen sind. Bevorzugt handelt es sich dabei um eine Folie, die aus einem Copolyester aufgebaut ist, dessen Dicarbonsäure-Komponenten zu 86 bis 93 Mol.-% auf Terephthalsäure abgeleitete Einheiten und zu 7 bis 14 Mol.-% auf Isophthalsäure abgeleitete Einheiten zurückzuführen sind. Als Diol im thermoplastischen Copolyester ist erfindungsgemäß bevorzugt Ethylenglykol geeignet.

0 bis 15 Gew.-% der Unterfolie (A) können aus weiteren Polymeren/Polymeranteile und/oder weiteren Substanzen aufgebaut sein, wobei die weiteren Polymere/Polymeranteile aus anderen aromatischen und/oder aliphatischen Dicarbonsäuren bzw. Diolen stammen. In vorteilhafter Weise können für den thermoplastischen Polyester der Unterfolie (A) auch Mischungen oder Blends aus den genannten Homo- und/oder Copolymeren verwendet werden.

Geeignete andere aromatische Dicarbonsäuren sind bevorzugt Terephthalsäure, 2,5-Furandicarbonsäure (FDCA), Biphenyl-4,4'-dicarbonsäure, Naphthalindicarbonsäuren (beispielsweise Naphthalin-1,4- oder 1,6-dicarbonsäure oder Naphthalin-2,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht.

Durch die Wahl der erfindungsgemäßen Anteile, die auf Terephthalsäure und Isophthalsäure abgeleitete Einheiten zurückzuführen sind, werden die gewünschten guten mechanischen Eigenschaften, insbesondere aber die gewünschte gute Thermoformbarkeit der biaxial orientierten Polyesterfolie erhalten. Beträgt der Anteil der Dicarbonsäure-Komponenten, die auf von Isophthalsäure abgeleitete Einheiten zurückzuführen sind, weniger als 6 Mol.-%, so kann die gewünschte gute Thermoformbarkeit der Folie nicht erhalten werden. Beträgt andererseits dieser Anteil mehr 15 Mol.-%, so ist eine verfahrenssichere Herstellung der Unterfolie (A) nach dem nachstehend beschriebenen Verfahren nicht mehr gegeben. Folien, die aus solch hohen Anteilen an Komponenten, die auf Isophthalsäure abgeleitete Einheiten zurückzuführen sind, bestehen, neigen im Herstellungsprozess z.B. sehr stark zum Verkleben mit sich selbst oder mit entsprechenden Maschinenteilen, z.B. Walzen in der Längsstreckung oder Walzen im Auslauf der Maschine nach der Querstreckung.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden in Gegenwart allgemein üblicher Polykondensationskatalysatoren, wie Antimontrioxid, Titanoxid, sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist dann antimonfrei. Unter antimonfrei versteht man im Sinne der Erfindung einen Antimon-Gehalt von ≤ 20 ppm (ein Antimon-Gehalt von ≤ 20 ppm kann im Polyesterrohstoff akzeptiert werden, da antimonfreie Rohstoffe zumeist in Reaktoren synthetisiert werden in denen Antimonhaltige/Antimontrioxid-katalysierte Rohstoffe hergestellt werden. Somit können ubiquitäre Antimonspuren nicht immer vollständig ausgeschlossen werden). Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

Die Folie gemäß der vorliegenden Erfindung ist charakterisiert durch einen Flächen-E-Modul im Bereich von 4500 bis 6400 N/mm², gemäß untenstehender Formel

$$E_{Fläche} = \sqrt{(E_{MD}{}^2 + E_{TD}{}^2)}.$$

$E_{MD}$ ist der E-Modul der Folie, gemessen in Längsrichtung der Maschine und $E_{TD}$ ist der E-Modul der Folie, gemessen in Querrichtung der Maschine. Diese Eigenschaft wird im Wesentlichen durch Einhaltung des unten beschriebenen erfindungsgemäßen Herstellprozesses in Verbindung mit den oben beschriebenen erfindungsgemäßen Polyestern erreicht. Es wurde überraschender Weise gefunden, das für den Fall, dass der Flächenmodul kleiner ist als 4500 N/mm², die Folie nicht mehr die gewünschten mechanischen Eigenschaften aufweist und daher für die genannte Anwendung ungeeignet ist. Beispielsweise kann dann die Folie aufgrund des zu geringen Flächen-E-Modul nicht mehr vernünftig gewickelt werden; es entstehen Falten, die unerwünscht sind. Weiterhin wurde im Rahmen der vorliegenden Erfindung gefunden, dass auf der anderen Seite für den Fall, wo der Flächenmodul größer ist als 6400 N/mm², die Folie nicht mehr entsprechend der Aufgabenstellung tiefgezogen werden kann.

Weiterhin ist die Folie gemäß der vorliegenden Erfindung durch die Summe der Festigkeiten ($\sigma_5$-Wert) in Längsrichtung (MD) und in Querrichtung (TD) im Bereich von 170 bis 220 MPa gekennzeichnet. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Summe der Festigkeiten kleiner als 170 MPa, so hat die Folie nicht mehr die gewünschten mechanischen Eigenschaften und ist daher für die Anwendung ungeeignet. Beispielsweise kann dann die Folie aufgrund der zu geringen Summe der Festigkeiten nicht mehr vernünftig in der Thermoformmaschine transportiert werden; die Folie verzieht sich, was unerwünscht ist. Im anderen Fall, wo der Summe der Festigkeiten größer ist als 220 MPa, kann die Folie nicht mehr entsprechend der Aufgabenstellung tiefgezogen werden.

Weiterhin ist die Folie gemäß der vorliegenden Erfindung durch eine Dichte von kleiner 1390 kg/m³ charakterisiert. Diese Eigenschaft wird im Wesentlichen wiederum durch Einhaltung des unten beschriebenen erfindungsgemäßen Herstellprozesses in Verbindung mit den oben beschriebenen erfindungsgemäßen Polyestern erreicht. Ist die Dichte der Folie größer als 1390 kg/m³, so ist die Folie überraschender Weise zu kristallin, um entsprechend der Aufgabenstellung tiefgezogen werden zu können. Zur Erzielung der gewünschten guten mechanischen Eigenschaften, insbesondere aber zur Erzielung der gewünschten guten Thermoformbarkeit ist es erforderlich, dass der SV-Wert der Unterfolie (A) in einem bestimmten Bereich liegt. Erfindungsgemäß liegt der SV-Wert der Unterfolie (A) im Bereich von 680 bis 1000, bevorzugt im Bereich von 710 bis 950, insbesondere bevorzugt im Bereich von 740 bis 900. Dabei gilt, dass sich die SV-Werte der jeweiligen Polymerschmelzen (Basis- und Deckschichten) um nicht mehr als 100, vorzugsweise nicht mehr als 75, insbesondere aber nicht mehr als 50 Einheiten unterscheiden sollten.

Ist der SV-Wert der Folie kleiner als 680, so kann die geforderte gute Thermoformbarkeit der Folie von ca. 70 mm Tiefzug nicht erreicht werden. Ist andererseits der SV-Wert größer als 1000, so ist der Polyester zu viskos und kann z.B. nicht mehr wirtschaftlich extrudiert werden.

Um das Verarbeitungsverhalten der Folie weiterhin zu verbessern, ist es von Vorteil, in die Unterfolie (A) Partikel einzuarbeiten. Dabei hat es sich als günstig erwiesen, die folgenden Bedingungen einzuhalten

a) Die Partikel sollen einen mittleren Partikeldurchmesser $d_{50}$ von 1,5 bis 5,0 μm aufweisen. Als besonders zweckmäßig hat es sich erwiesen, Teilchen mit einem $d_{50}$ von 1,7 bis 4,5 μm und besonders bevorzugt von 2,0 bis 4,0 μm zu verwenden.

b) Die Partikel sollen in der Unterfolie in einer Konzentration von 0 bis 0,1 Gew.-% (1000 ppm) vorhanden sein. Bevorzugt beträgt die Konzentration der Partikel in der Folie $1,0\times10.^5$ bis 0,075 Gew.-% und besonders bevorzugt $1,1\times10^{-5}$ bis 0,05 Gew.-%.

Bei der Verwendung von Teilchen mit einem Durchmesser $d_{50}$, der unterhalb von 1,5 μm liegt, ist ein positiver Einfluss der Partikel z.B. auf die Wicklung der Folie nicht gegeben. In diesem Fall neigt die Folie z.B. beim Abwickeln zum Ein- oder Weiterreißen, was unerwünscht ist. Teilchen mit einem Durchmesser $d_{50}$ von größer als 5,0 μm verursachen in der Regel Probleme bei der Verstreckung der Folie, es bilden sich zunehmend Vakuolen, die die Trübung der Folie negativ beeinflussen. Enthält die Unterfolie (A) Partikel in einer Konzentration von mehr als 0,1 Gew.-%, so liegt die Trübung der Folie nicht mehr im erfindungsgemäßen Bereich.

Übliche Antiblockmittel sind anorganische und/oder organische Partikel, wie beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Calcium-, Barium-, Zink- oder Mangan-Salze der in der Unterfolie (A) eingesetzten abgeleiteten Dicarbonsäuren, Titandioxid, Kaolin oder vernetzte Polystyrol- oder vernetzte Polymer-Partikel auf Basis von Acrylsäurederivaten.

Erfindungsgemäß bevorzugte Partikel sind synthetisch hergestellte, amorphe $SiO_2$-Partikel in kolloidaler Form. Die Partikel werden hervorragend in die Polymermatrix eingebunden und erzeugen nur wenige Vakuolen.

Beim sogenannten Cook-In-Verfahren (siehe hierzu die EP 1 697 129 oder die EP 2810776 A1) wird die Packung verschlossen in den Backofen gelegt und nach einer bestimmten Garzeit aus dem Ofen geholt. Die Garzeit richtet sich im Wesentlichen nach der Packungsgröße (Masse des Inhalts) und liegt in der Regel zwischen 30 min und zwei (2) Stunden.

Prozessbedingt wird dabei die thermoformbare Folie über einen Großteil ihrer Fläche wenig thermisch belastet. Nur im Randbereich der Packung und hier insbesondere an den Ecken der Packung (Siegelrand) findet eine deutlich erhöhte thermische Belastung der Folie statt. Während der übrige Teil der thermogeformten Folie durch das verdunstende Wasser Temperaturen deutlich unterhalb von 160 °C erfährt, wird der Eckenbereich der Packung der Ofentemperatur für die gesamte Garzeit ausgesetzt.

Im Extremfall wird dabei die Folie im Eckebereich über mehr als 2 h bei einer Temperatur von 220 °C thermisch belastet, wobei bei dieser erhöhten Temperatur Sauerstoff in das Polymere eindringen kann.

Als Folge hiervon kann es durchaus vorkommen, dass die Packung und damit die Folie insbesondere in den Ecken anfängt, spröde zu werden und zur Splitterbildung neigt. Dies ist äußerst unerwünscht und muss vermieden werden.

Wird für diesen Anwendungsbereich eine erhöhte Thermostabilität gefordert, enthält die Folie - aus vorzugsweise antimonfreien Polyester - bevorzugt einen oder mehrere Radikalfänger. Dieser/Diese Radikalfänger basiert(en) bevorzugt auf phenolischen Antioxidantien.

Es wurde überraschend gefunden, dass die Folie, die einen oder mehrere Radikalfänger enthält, eine deutlich erhöhte Temperaturresistenz aufweist, so dass daraus hergestellte Verpackungen mehr als eine Stunde in einem Ofen bei Temperaturen von oberhalb 220 °C verbleiben können, ohne dabei zu verspröden.

In einer bevorzugten Ausführungsform enthält die Folie nach der vorliegenden Erfindung 500 -3000 ppm eines Radikalfängers, wobei der Gehalt bevorzugt zwischen 600 - 2500 ppm und insbesondere bevorzugt zwischen 700 - 2000 ppm liegt. Niedrigere Gehalte als 500 ppm führen tendenziell zu einem Versagen im Ofen (= Splitterbildung) und höhere Gehalte als 3000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 3000 ppm führen zudem tendenziell zur Bildung von Gelen und einem nicht gewünschten Gelbstich der Folie.

Als Radikalfänger kann sowohl eine Verbindung oder eine Mischung aus verschiedenen Radikalfängern eingesetzt werden, wobei es bevorzugt ist eine Verbindung als Radikalfänger einzusetzen. Der/die verwendete(n) Radikalfänger werden bevorzugt aus der Gruppe der phenolischen Antioxidantien ausgewählt.

Bevorzugte Radikalfänger sind pentaerythritol tetrakis [3-(3,5-di-tert-butyl-4-hydroxyphenyl)-propionate] (CAS-Nr. 6683-19-8) und 1,3,5-Trimethyl-2,4,6-tris(3,5-di-tert-butyl-4-hydroxybenzyl)-benzol) (CAS-Nr. 1709-70-2), erhältlich unter den Handelsnamen Irganox 1010 und Irganox 1330 der Firma BASF.

Die Wirksamkeit des Radikalfängers kann direkt an der Verpackung, z.B. nach Entnahme der Verpackung aus dem Ofen getestet werden. Die Verpackung wird dabei als gut (= für die Anwendung geeignet) bezeichnet, wenn an keiner Stelle der Folie nach der vorliegenden Erfindung ein Absplittern festgestellt wird.

Die Unterfolie (A) kann einschichtig oder mehrschichtig (d.h. zu mindestens zweischichtig) aufgebaut sein. Zur Erzielung der vorgenannten Eigenschaften, insbesondere der geforderten guten optischen Eigenschaften der Polyesterfolie, hat sich ein einschichtiger Aufbau der Folie als vorteilhaft herausgestellt. Aber auch ein zwei- oder dreischichtiger Aufbau der Unterfolie (A) aus zwei Schichten A′ und A″ oder drei Schichten A′A"A′ oder A′A"A‴ hat sich als geeignet erwiesen. Die Menge an Partikeln in der Basisschicht A" einer z.B. dreischichtigen Folie sollte dabei niedriger eingestellt werden als in den beiden Schichten A′ (und A‴), die vorzugsweise vom Aufbau gleichgehalten werden oder aber auch verschieden sein können.

Die Partikelkonzentration in der Schicht (A") sollte dabei so gewählt werden, dass sie sich positiv auf die Trübung und den Glanz der Folie auswirkt. Bei einer dreischichtigen Folie vom genannten Typ wird in der Schicht (A") die Partikelkonzentration zwischen 0 und 0,08 Gew.-%, vorzugsweise zwischen 0 und 0,05 Gew.-% und insbesondere zwischen 0 und 0,02 Gew.-% liegen. Der Partikeldurchmesser der eingesetzten Teilchen ist mit einem $d_{50}$ von größer 1,5 $\mu$m besonders bevorzugt.

Bei der Wahl der Partikelkonzentration in den Deckschichten (A′ oder A‴) und in der Basisschicht (A") ist darauf zu achten, dass die Partikelkonzentration in der gesamten Folie den erfindungsgemäßen Wert von 0,1 Gew.-% nicht überschreitet.

Die Dicke der beiden Schichten A′ (oder A′ und A‴) kann gleich oder verschieden sein. Ihre Dicken liegen im Allgemeinen zwischen 0,2 und 5 $\mu$m. Die Unterfolie (A) kann darüber hinaus zusätzlich übliche Additive, wie Stabilisatoren (UV, Hydrolyse), insbesondere aber Wärmestabilisatoren (z.B. Irganox 1010) oder weitere Füller (z.B. Farbpigmente), in den vom Hersteller empfohlenen Konzentrationen enthalten. Sie werden zweckmäßig dem Polymer, bzw. der Polymermischung, bereits vor dem Aufschmelzen im Extruder zugesetzt.

Die Gesamtdicke der erfindungsgemäßen Polyesterfolie (A) kann innerhalb bestimmter Grenzen variieren. Sie beträgt 50 bis 300 μm, bevorzugt 51 bis 300 μm und besonders bevorzugt 52 bis 300 μm. Ist die Dicke der Folie (A) geringer als 50 μm, so sind die Mechanik und die Barriereeigenschaften der thermogeformten Folie nicht ausreichend. Ist die Dicke der Folie (A) dagegen größer als 300 μm, so verschlechtert sich die Thermoformbarkeit der Folie und außerdem wird die Herstellung der Folie unwirtschaftlich, was beides unerwünscht ist.

Gegenstand der vorliegenden Erfindung ist ebenfalls ein Verfahren zur Herstellung der thermoformbaren Unterfolie (A). Es umfasst die Herstellung der Unterfolie durch Extrusion (Herstellung von Schicht (A)) oder Koextrusion (z.B. Herstellung der Schichten (A'A"A'")), das biaxiale Strecken der Unterfolie (A), sowie das Thermofixieren und das Aufwickeln der gestreckten Unterfolie (A).

Bei dem Koextrusions-Verfahren werden nach der Extrusion der jeweiligen Schmelzen in getrennten Extrudern diese in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt. Für die Durchmischung der verschiedenen Komponenten hat es sich dabei als vorteilhaft erwiesen, wenn die Extrusion der Polymere für die Schicht (A) oder Schichten (A'A"A'") mit einem Zweischneckenextruder mit Entgasungsmöglichkeit(en) durchgeführt wird. Es wird hierdurch eine Folie hergestellt, die optisch einwandfrei ist, z.B. keine Wolkenstruktur oder keine Streifen aufweist.

Die biaxiale Streckung der Folie wird sequentiell durchgeführt. Bei der sequenziellen Streckung wird vorzugsweise erst in Längsrichtung und anschließend in Querrichtung gestreckt. Das Strecken in Längsrichtung lässt sich z.B. mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperaturen, bei der die biaxiale Streckung durchgeführt wird, können in gewissen Bereichen variieren, sie richten sich im Wesentlichen nach den gewünschten Eigenschaften, insbesondere den gewünschten Thermoformeigenschaften der erfindungsgemäßen Folie. Überraschender Weise wurde dabei gefunden, dass zur Erzielung der gewünschten Thermoformbarkeit die Folie geringer versreckt werden muss, als es nach dem Stand der Technik üblich ist.

Zur Erzielung der gewünschten Thermoformbarkeit der Folie wird die Streckung in Längsrichtung unter bestimmten Bedingungen durchgeführt. Die Temperatur der Folie liegt bei der Streckung in einem Bereich von 70 bis 100 °C (die Aufheiztemperaturen der Walzen betragen 60 bis 110 °C). Das Längsstreckverhältnis wird im Bereich von 2,2:1 bis 3,8:1, bevorzugt im Bereich von 2,3:1 bis 3,6:1 und besonders bevorzugt im Bereich von 2,4:1 bis 3,4:1 durchgeführt. Wird die Folie unterhalb von 2,2:1 verstreckt, so ist z.B. das Dickenprofil schlecht, wird die Folie oberhalb von 3,8:1 verstreckt, so ist die Thermoformbarkeit nicht mehr ausreichend.

Nach der der Längsstreckung erfolgt die Querstreckung in einem entsprechenden Kluppenrahmen. Die Temperaturen der Aufheizfelder im Kluppenrahmen betragen 70 bis 120 °C (Film Temperatur: 60 bis 110 °C) Die Streckung in Querrichtung wird in einem Temperaturbereich der Folie von 90 °C (Beginn der Streckung) bis 140 °C (Ende der Streckung) durchgeführt. Das Querstreckverhältnis liegt erfindungsgemäß im Bereich von 2,2:1 bis 3,8:1, bevorzugt von 2,4:1 bis 3,7:1 und besonders bevorzugt im Bereich von 2,6:1 bis 3,6:1. Wird die Folie unterhalb von 2,2:1 verstreckt, so ist z.B. das Dickenprofil schlecht, wird die Folie oberhalb von 3,8:1 verstreckt, so ist die Thermoformbarkeit nicht mehr ausreichend.

Nach der biaxialen Orientierung erfolgt die Thermofixierung der Folie. Überraschender Weise wurde gefunden, dass zur Erzielung der vorgenannten, gewünschten guten Thermoformbarkeit der Folie die Thermofixierung unter bestimmten, erfindungsgemäßen, Bedingungen durchgeführt werden muss. Die Zeitdauer für die Thermofixierung beträgt erfindungsgemäß 5 bis 25 s, bevorzugt 6 bis 22 s und besonders bevorzugt 7 bis 20 s. Die Temperatur, bei der die Thermofixierung durchgeführt wird, liegt erfindungsgemäß im Bereich von 175 bis 220 °C, bevorzugt im Bereich von 178 bis 215 °C und besonders bevorzugt im Bereich von 180 bis 210 °C.

Nach der Thermofixierung wird die Folie abgekühlt und in üblicher Weise aufgewickelt.

Für die Herstellung der erfindungsgemäßen Unterfolie (A) ist es wichtig, dass die oben genannten Verfahrensbedingungen eingehalten werden. Werden die genannten erfindungsgemäßen Verfahrensbedingungen bei der Längs- und Querstreckung, sowie bei der Fixierung der Unterfolie (A) nicht eingehalten, so können die erfindungsgemäßen Eigenschaften der Folie hinsichtlich Mechanik der Folie, insbesondere aber hinsichtlich der gewünschten Thermoformbarkeit und Durchstoßfestigkeit nicht realisiert werden, was unerwünscht ist.

Zur Verbesserung der Wickelbarkeit der transparenten, niedrig gefüllten Folie wird in einer bevorzugten Ausführungsform zumindest eine Oberfläche der Unterfolie (A) inline oder offline mit einer weiteren Schicht (C) beschichtet, die Poly(acryl-), und/oder Poly(metharylsäureaikylester) und/oder Poly(acryl-co-methacrylsäurealkylester) enthält. Weiterhin können acrylische und/oder methacrylische Copolyester enthalten sein, die eine Vernetzung der Polymere bewirken. Dabei wird bevorzugt N-Methylolacrylamid zur Herstellung der Copolymere eingesetzt. Weiterhin können auch andere Vernetzer wie z.B. Melamin eingesetzt werden. Bevorzugt wird die Beschichtung inline aufgetragen.

Die Beschichtung (C) gemäß der vorliegenden Erfindung ist ausführlich in der EPA 0 144 948 beschrieben, auf die an dieser Stelle ausdrücklich Bezug genommen wird.

Die bevorzugte Acrylat-Beschichtung wird zumindest einseitig auf die Unterfolie (A) aufgebracht und dient im Wesentlichen zur Verbesserung der Wickelung, insbesondere zur Verbesserung der Abwickelung der Folie nach Lagerung (bei erhöhten Temperaturen). Die Beschichtungsrezeptur kann bekannte Zusätze enthalten wie z. B. Antistatika, Netzmittel, Tenside, pH-Regulatoren, Antioxidantien, Farbstoffe, Pigmente, Anti-Blockmittel wie z. B. kolloidales $SiO_2$ usw. Normalerweise ist es angebracht, ein Tensid einzuarbeiten, um die Fähigkeit der wässrigen Beschichtung zur Benetzung der Trägerfolie aus Polyester weiter zu erhöhen und um die Partikel aus Copolymere aus Acryl-/methacrylsäure zu stabilisieren.

Die Beschichtung der Unterfolie (A) mit der acrylisch vernetzenden Schicht (C) erfolgt entweder inline vorzugsweise zwischen dem ersten und dem zweiten Streckschritt oder offline nach der Herstellung der biaxial orientierten Folie.

Bei der vorzugsweise angewendeten inline Beschichtung wird eine oder beide Oberflächen der Unterfolie (A) vor der Querstreckung mit einer Schicht (C) beschichtet. Bei der offline Beschichtung erfolgt die Aufbringung der Schicht (C) vorzugsweise nach der Herstellung der Unterfolie (A).

Die Polyesterfolie wird mit einer funktionalen Beschichtung derart beschichtet, dass die Beschichtung auf der fertigen Polyesterfolie eine Dicke von bevorzugt 5 bis 100 nm, besonders bevorzugt 10 bis 90 und ganz besonders bevorzugt 15 bis 80 nm aufweist. Besonders bevorzugt ist die Aufbringung der Schicht (C) mittels des "Reverse gravure-roll coating" Verfahrens, bei dem sich die Beschichtung äußerst homogen in Schichtdicken bis zu 200 nm auftragen lassen. Die Beschichtung wird bevorzugt als Lösung, Suspension oder als Dispersion aufgetragen, besonders bevorzugt als wässrige Lösung, Suspension oder der Dispersion.

Die genannten Stoffe werden als verdünnte, wässrige Lösung oder Dispersion auf eine der beiden Folienoberflächen aufgebracht und anschließend wird das Lösungsmittel verflüchtigt. Wird die Beschichtung Inline vor der Querstreckung aufgebracht, reicht die Temperaturbehandlung in der Querstreckung und der anschließenden Hitzefixierung aus, um das Lösungsmittel zu verflüchtigen und die Beschichtung zu trocknen.

### *Erfindungsgemäße Eigenschaften der* Unterfolie (A)

Die erfindungsgemäße Unterfolie (A), hergestellt nach oben beschriebenem erfindungsgemäßen Verfahren, besitzt eine Reihe von Eigenschaften, von denen untenstehend die wichtigsten aufgeführt sind.

Die erfindungsgemäße Unterfolie (A) zeichnet sich durch sehr gute mechanische Eigenschaften aus (z.B. Flächen-E-Modul, Summe der Festigkeiten), die es u.a. ermöglichen, dass die gewünschte gute Thermoformbarkeit und die gewünschte gute Durchstoßfestigkeit erreicht werden.

Die Unterfolie (A) zeichnet sich durch brillante optische Eigenschaften aus. Die Trübung der Unterfolie (A) ist kleiner als 2,0 %, bevorzugt kleiner als 1,5 % und besonders bevorzugt kleiner als 1,0 %. Die Clarity der Unterfolie ist größer als 85 % bevorzugt größer als 90 % und besonders bevorzugt größer als 95 %. Der Glanz der Unterfolie beträgt mehr als 140 bevorzugt mehr als 160 und besonders bevorzugt mehr als 180.

Die für die Anwendung wichtige Durchstoßfestigkeit F[N] der Folie ist überraschender Weise derart hoch, dass die daraus hergestellte tiefgezogene Packung, ohne Schaden zu nehmen, transportiert und gelagert werden kann. Erfindungsgemäß weist die Unterfolie (A) im Definitionsbereich für die Dicke eine Durchstoßfestigkeit F auf, die mit der Dicke d der Folie gemäß folgender Formel korreliert

$$\frac{F[N]}{d[\mu m]} > 0{,}35$$

Bevorzugt ist F/d größer als 0,37 und besonders bevorzugt ist F/d größer als 0,38.

Die Unterfolie (A) weist eine Thermoformbarkeit auf, die mindestens 70 mm beträgt, bei einem Thermoformverhältnis von mindestens 2,5. Bevorzugt ist die Thermoformbarkeit größer als 73 mm und besonders bevorzugt größer als 76 mm. Bevorzugt ist das Thermoformverhältnis größer als 2,6 und besonders bevorzugt größer als 2,7.

Mit Schalen, die eine derartige, erfindungsgemäße Thermoformbarkeit aufweisen, können die am Markt üblichen Portionen an Fleisch-, Geflügel oder Fisch problemlos im üblichen Verpackungsdesign eingepackt werden.

Die Unterfolie (A) weist die geforderten guten Barriereeigenschaften auf, insbesondere gegen Sauerstoff, Wasserdampf und verschiedenen Aromen.

Die hochtransparente Unterfolie (A) lässt sich gut wickeln und gut verarbeiten. Beim Wickeln der Folien haften die einzelnen Folienlagen nicht aneinander, auch nicht bei erhöhter Temperatur, wie 50 oder 60 °C.

Die erfindungsgemäße thermoformfähige Polyesterfolie eignet sich hervorragend zum Verpacken von Nahrungs- und Genussmitteln. Sie ist insbesondere zur Verpackung von Nahrungs- und Genussmitteln in thermogeformten Menüschalen geeignet, die nach dem vorstehenden Verfahren hergestellt wurden.

Die Tabelle 1 fasst u.a. die wichtigsten erfindungsgemäßen Folieneigenschaften zusammen.

## Tabelle 1

| Unterfolie (A) | | Erfindungsmäßiger Bereich | Bevorzugt | Besonders bevorzugt | Einheit | Messmethode |
|---|---|---|---|---|---|---|
| Anteil Copolyester in Unterfolie (A) | | $\geq 85$ | $\geq 86$ | $\geq 87$ | Gew.-% | |
| Anteil Einheiten im Copolyester, aufgebaut auf Isophthalateinheiten | | 6 bis 15 | 7 bis 14 | 8 bis 13 | Mol-% | |
| Füllstoffkonzentration | | 0 bis 0,1 | $1,0 \times 10^{-5}$ bis 0,075 | $1,1 \times 10^{-5}$ bis 0,05 | Gew.-% | |
| Partikeldurchmesser $d_{50}$ | | 1,5 bis 5 | 1,7 bis 4,5 | 2,0 bis 4,0 | µm | |

**Verfahrenstechnik**

| | | Erfindungsmäßiger Bereich | Bevorzugt | Besonders bevorzugt | Einheit | Messmethode |
|---|---|---|---|---|---|---|
| Längsstreckung (T-Prozess) | Aufheiztemperatur der Walzen | 60 bis 110 | 65 bis 105 | | °C | |
| | Strecktemperatur der Folie | 70 bis 100 | 75 bis 100 | | °C | |
| | Längsstreckverhältnis | 2,2 bis 3,8 | 2,3 bis 3,6 | 2,4 bis 3,4 | | |
| Querstreckung | Temperatur Aufheizfelder | 70 bis 120 | | | °C | |
| | Aufheiztemperatur der Folie | 60-110 | | | °C | |
| | Strecktemperatur | 90-140 | | | °C | |
| | Querstreckverhältnis | 2,2 bis 3,8 | 2,4 bis 3,7 | 2,6 bis 3,6 | | |
| Fixierung | Temperatur | 175 bis 220 | 178 bis 215 | 180 bis 210 | °C | |
| | Dauer | 5 bis 25 | 6 bis 22 | 7 bis 20 | sec | |

**Eigenschaften der Folie**

| | | Erfindungsmäßiger Bereich | Bevorzugt | Besonders bevorzugt | Einheit | Messmethode |
|---|---|---|---|---|---|---|
| Flächen E-Modul | | 4500 bis 6300 | 4600 bis 6200 | 4700 bis 6100 | $N/mm^2$ | ISO 527-1 und ISO 527-3; Mustertyp 2 |
| Summe der σS-Werte | | 170 bis 220 | 175 bis 215 | 180 bis 210 | $N/mm^2$ | ISO 527-1 und ISO 527-3; Mustertyp 2 |
| Dichte | | < 1390 | < 1389 | < 1388 | $kg/m^3$ | ASTM D 1505-68, Methode C |
| Trübung der Folie | | < 2,0 | < 1,5 | < 1,0 | % | ASTM D 1003-61, Methode A |
| Clarity der Folie | | $\geq 85$ | $\geq 90$ | $\geq 95$ | % | ASTM D 1003 |
| Glanz der Folie | | $\geq 140$ | $\geq 160$ | $\geq 180$ | N/15 mm | DIN 67530 |
| SV-Wert der Folie | | 680 bis 1000 | 710 bis 950 | 740 bis 900 | | |
| Durchstoßfestigkeit / Dicke der Folie | | > 0,35 | > 0,37 | > 0,38 | N/µm | EN 14447 |
| Tiefziehfähigkeit | Tiefe | $\geq 70$ | $\geq 73$ | $\geq 76$ | mm | |
| | $A_{Schale}/A_{Folie}$ | $\geq 2,5$ | $\geq 2,6$ | $\geq 2,7$ | | |
| Dicke der Folie | | 50 bis 300 | 51 bis 300 | 52 bis 300 | µm | |

**(II) Oberfolie (B) = Siegelfähige Polyesterfolie**

Die Packung nach der vorliegenden Erfindung enthält des Weiteren eine Oberfolie (B), die durch eine transparente, biaxial orientierte, koextrudierte und siegelfähige Polyesterfolie (B′ B″) oder (B′ B″ B‴) gebildet wird.

*Deckschicht (B')*

Die siegelfähige Deckschicht (B') der Oberfolie (B) umfasst zu mindestens 90 Gew.-% einen erfindungsgemäßen Polyester. Der erfindungsgemäße Polyester enthält einen amorphen Polyester I in einem Anteil von 85 bis 97 Gew.-% und einen teilkristallinen Polyester II in einem Anteil von 3 bis 15 Gew.-%. Durch den hohen Anteil an Polyester I, der 15 bis 40 Mol-% CHDM enthält, ist die Deckschicht (B') im Wesentlichen amorph und somit als Siegelschicht für das vorgedachte Anwendungsgebiet gut geeignet.

0 bis 10 Gew.-% der Deckschicht (B') können aus weiteren Polyestern und/oder Substanzen aufgebaut sein. Die Monomereinheiten der weiteren Polyester stammen dabei aus anderen aliphatischen, cycloaliphatischen oder aromatischen Diolen bzw. Dicarbonsäuren.

Andere zur Bildung der weiteren Polyestern geeignete aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht.

Andere aromatische Dicarbonsäuren der weiteren Polyestern sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Gyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Der Anteil von Polyester I im erfindungsgemäßen Polyester der Deckschicht (B') beträgt 85 bis 97 Gew.-%. Bevorzugt beträgt der Anteil des Polyesters I 90 bis 97 Gew.-% und besonders bevorzugt beträgt er 92 bis 97 Gew.-%. Beträgt der Anteil an Polyester I in der Deckschicht (B') weniger als 85 Gew.-%, so wird das Siegelverhalten der Folie beeinträchtigt. Beträgt der Anteil an Polyester I in der Deckschicht (B') mehr als 97 Gew.-%, so wird das self-venting beeinträchtigt, was unerwünscht ist. Außerdem wird die Herstellbarkeit der Folie erschwert, da die Tendenz der Folie, an bestimmten Maschinenteilen zu kleben, besonders hoch wird.

Polyester I ist im Wesentlichen aus Copolyestern aufgebaut, die überwiegend aus Terephthalsäure-Einheiten und aus Ethylenglykol- und 1,4-Bis-hydroxymethylcyclohexan (= 1,4-Cyclohexandimethanol (CHDM))-Einheiten zusammengesetzt sind. Die bevorzugten Copolyester sind solche, die aus Ethylenterephthalat- und 1,4-Cyclohexandimethylenterephthalat -Einheiten aufgebaut sind. Der Anteil an Ethylenterephthalat beträgt 60 bis 85 Mol-% und der entsprechende Anteil an Cyclohexandimethylenterephthalat 15 bis 40 Mol-%. Bevorzugt sind weiterhin Copolyester, bei denen der Anteil an Ethylenterephthalat 62 bis 80 Mol-% und der entsprechende Anteil an Cyclohexandimethylenterephthalat 20 bis 38 Mol-% beträgt, und ganz bevorzugt sind Copolyester, bei denen der Anteil an Ethylenterephthalat 65 bis 80 Mol-% und der entsprechende Anteil an Cyclohexandimethylenterephthalat 20 bis 35 Mol-% beträgt.

Polyester I kann zudem noch 0 bis 5 Mol-% weitere Monomereinheiten enthalten, vorzugsweise cycloaliphatischen Diole, wie z.B. Diethylenglykol oder Triethylenglykol, oder allgemein aliphatische Glykole der allgemeinen Formel $HO-(CH_2)_n-OH$, wobei n eine ganze Zahl von 3 bis 6 darstellt.

Der Anteil von Polyester II in der Deckschicht (B') beträgt 3 bis 15 Gew.-%. In der bevorzugten Ausführungsform beträgt der Anteil von Polyester II 3 bis 10 Gew.-% und in der besonders bevorzugten Ausführungsform beträgt er 3 bis 8 Gew.-%. Beträgt der Anteil von Polyester II in der Deckschicht (B') weniger als 3 Gew.-%, so wird das self-venting der Folie beeinträchtigt. Anstelle eines flächigen self-ventings über bestimmte Bereiche der Verpackung, bilden sich über die Länge der Siegelnaht kleine Kanälchen, die das self-venting beeinträchtigen, was unerwünscht ist. Beträgt andererseits der Anteil an Polyester II mehr als 15 Gew.-%, so wird die Siegelfähigkeit der Deckschicht (B') verschlechtert, was ebenfalls unerwünscht ist.

Polyester II besteht bevorzugt aus Ethylenterepthalat oder Copolyester aus Ethylenterephthalat und Ethylenisophthalat. Im Allgemeinen basiert Polyester II zumindest auf den folgenden Dicarboxylaten und Alkylenen, jeweils bezogen auf die Gesamtdicarboxylat- bzw. Gesamtalkylenmenge

- 70 bis 100 Mol -%, bevorzugt 72 bis 98 Mol-% und besonders bevorzugt 74 bis 95 Mol-% Ethylenterepthalat
- 0 bis 30 Mol-%, bevorzugt 2 bis 28 Mol-% und besonders bevorzugt 5 bis 26 Mol-% Isophthalat
- Mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie z.B. für die Basisschicht (B") als Haupt- und Nebencarbonsäuren aufgelistet worden sind.

Besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D.h. es handelt sich um Polyethylenterephthalat/isophthalat.

Bevorzugt ist die Deckschicht (B′) aus einer physikalischen Mischung aus den Polyestern I und II zusammengesetzt, die in der Dosierung vor der Extrusion hergestellt wird. Gegenüber der Verwendung von nur einem Polyester mit vergleichbaren Anteilen der Komponenten weist eine Mischung die folgenden Vorteile auf

- Die Mischung der beiden Polyester I und II führt zu Unverträglichkeiten in der Schicht. Hierdurch wird die Oberfläche der Deckschicht (B′) rauer und das self-venting wird dadurch besser.
- Außerdem können mit der Mischung praktisch gesehen die gewünschten Siegeleigenschaften besser eingestellt werden
- Die Zugabe von Partikeln gestaltet sich bei Polyester II einfacher als bei Polyester I.

Zur Erzielung des gewünschten guten self-ventings, insbesondere aber zur Erzielung einer guten Extrudierbarkeit der Copolyester, ist es günstig, dass der SV-Wert des amorphen Polyester I in einem bestimmten Bereich liegt. Es hat sich als zweckmäßig erwiesen, wenn der SV-Wert des Polyester I im Bereich von 680 bis 900, bevorzugt im Bereich von 710 bis 880 und insbesondere bevorzugt im Bereich von 740 bis 850 liegt. Ist der SV-Wert kleiner als 680 oder größer als 900, so kann der Rohstoff z.B. nicht mehr wirtschaftlich extrudiert werden.

Zur Erzielung eines guten seif-ventings der heißsiegelfähigen Deckschicht (B′), einer guten Verarbeitbarkeit der Oberfolie (B), aber auch zur Verbesserung des Abziehverhaltens der Oberfolie (B) von der Menüschale (aus Unterfolie (A) durch Thermoformen hergestellt) nach dem Garen, ist es erfindungsgemäß von Vorteil, die heißsiegelfähige Deckschicht (B') mit Hilfe von geeigneten Antiblockmitteln (= Partikel) weiter zu modifizieren.

Für ein gutes self-venting der heißsiegelfähigen Deckschicht (B′) muss der Durchmesser $d_{50}$ der Teilchen (= Partikel) in einem erfindungsgemäßen Bereich liegen. Als besonders vorteilhaft hat es sich dabei erwiesen, Teilchen mit einem mittleren Partikeldurchmesser $d_{50}$ von 1,5 bis 5,0 $\mu$m, bevorzugt von 1,5 bis 4,5 $\mu$m und besonders bevorzugt von 1,5 bis 4,0 $\mu$m zu verwenden. Bei der Verwendung von Teilchen mit einem Durchmesser, der unterhalb 1,5 $\mu$m liegt, ist ein positiver Einfluss der Partikel auf das self-venting der Deckschicht (B') nicht gegeben. Außerdem neigt dann die Folie nach dem Garen beim Abziehen von der Menüschale zum Ein- oder Weiterreißen, was unerwünscht ist. Teilchen mit einem Durchmesser von größer als 5,0 $\mu$m verursachen in der Regel eine zu hohe Trübung und einen zu geringen Glanz der Folie, sowie Filterprobleme.

Zur Bereitstellung des gewünschten guten self-ventings, einer guten Wickelung und einer guten Verarbeitbarkeit der Folie hat es sich als günstig erwiesen, wenn die heißsiegelbare Deckschicht (B') Partikel in einer Konzentration von mehr als 0,04 Gew.-%, bevorzugt von mehr als 0,05 Gew.-% und besonders bevorzugt von mehr als 0,06 Gew.-% enthält. Die maximale Konzentration der Partikel beträgt 0,35 Gew.-%, bevorzugt 0,30 Gew.-% und besonders bevorzugt 0,25 Gew.-%. Enthält die Deckschicht (B') Partikel in einer Konzentration von weniger als 0,04 Gew.-%, so ist ein positiver Einfluss auf das self-venting nicht mehr gegeben. Enthält die Deckschicht (B') Partikel in einer Konzentration von mehr als 0,35 Gew.-%, so wird die Trübung der Folie zu groß.

In einer bevorzugten Ausführungsform ist in der heißsiegelfähigen Deckschicht (B') der Partikeldurchmesser $d_{50}$ größer als die Dicke dieser Schicht. Es hat sich erfindungsgemäß als günstig erwiesen, ein Partikeldurchmesser/Schichtdicken-Verhältnis von größer als 1,0, bevorzugt von größer als 1,1 und besonders bevorzugt von größer als 1,2 einzuhalten. In diesen Fällen ist ein besonders positiver Einfluss der Partikel auf das self-venting und das Abziehverhalten der Folie von der Menüschale nach dem Garen gegeben.

Erfindungsgemäß bevorzugte Partikel sind synthetisch hergestellte, amorphe $SiO_2$-Partikel in kolloidaler Form. Die Partikel werden hervorragend in die Polymermatrix eingebunden und erzeugen nur wenige Vakuolen. Vakuolen können z.B. bei der biaxialen Orientierung der Folie entstehen; sie bewirken im Allgemeinen eine Erhöhung der Trübung und sind daher für die vorliegende Erfindung zu vermeiden. Zur Herstellung der $SiO_2$-Partikel wird auf den Stand der Technik verwiesen; das Verfahren ist z.B. in der EP 1 475 228 B1 ausführlich offenbart.

Typische andere Partikel, die in der Deckschicht (B') verwendet werden, sind anorganische und/oder organische Partikel, beispielsweise Calciumcarbonat, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder partikelförmige Polymere wie z. B. vernetzte Polystyrol- oder Arcrylat-Partikel.

Erfindungsgemäß weist die heißsiegelfähige Deckschicht (B') eine Dicke von 1,5 bis 4 $\mu$m auf. Ist die Dicke der Deckschicht (B') geringer als 1,5 $\mu$m, so ist die Siegelung der Oberfolie (B) zur Unterfolie (A) nicht ausreichend. Ist die Deckschichtdicke größer als 4 $\mu$m, so verschlechtert sich das self-venting der Packung, was unerwünscht ist.

Die Deckschicht (B') zeigt gute Siegeleigenschaften gegen sich selbst (Fin-Siegelung, Deckschicht (B') gegen Deckschicht (B')), insbesondere aber gegen die Unterfolie (A). Nach einer Siegelung bei 200 °C (460 N, 2 s) ist die Siegelnahtfestigkeit der Deckschicht (B') gegen sich selbst (Fin-Siegelung) und gegen die Unterfolie (A) größer als 2 N/15 mm und beträgt max. 7 N/15 mm.

## *Basisschicht (B'')*

Die Basisschicht (B") der Oberfolie (B) besteht aus einem thermoplastischen Polyester, der aus Dicarbonsäure- und aus Diol-abgeleiteten Einheiten, bzw. Dicarboxylaten und Alkylenen aufgebaut ist und im Allgemeinen die folgenden Dicarboxylate und Alkylene, jeweils bezogen auf die Gesamtdicarboxylat- bzw. Gesamtalkylenmenge, beinhaltet

- mehr als 90 Mol-%, bevorzugt mehr als 95 Mol-% Terephthalat
- mehr als 90 Mol-%, bevorzugt mehr als 95 Mol-% an Ethylen.

Andere zur Bildung des Polyesters geeignete aliphatische Diole sind beispielsweise Diethylenglykol, Triethylenglykol, aliphatische Glykole der allgemeinen Formel $HO\text{-}(CH_2)_n\text{-}OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Geeignete andere aromatische Diole entsprechen beispielsweise der Formel $HO\text{-}C_6H_4\text{-}X\text{-}C_6H_4\text{-}OH$, wobei X für $-CH_2-$, $-C(CH_3)_2-$, $-C(CF_3)_2-$, -O-, -S- oder $-SO_2-$ steht.

Andere aromatische Dicarbonsäuren sind bevorzugt Benzoldicarbonsäuren, Naphtalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester für die Basisschicht (B") kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan, Aluminium oder Germanium-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Als besonders vorteilhaft hat es sich erwiesen, wenn die Zwischenprodukte in Gegenwart von Titandioxid oder Germanium-Verbindungen polykondensiert werden, beziehungsweise, die Direktveresterungsverfahren in Gegenwart von Polykondensationskatalysatoren wie Titandioxid oder Germanium-Verbindungen durchgeführt werden. Die biaxial orientierte Polyesterfolie ist damit antimonfrei. Angestrebt wird im besonders bevorzugten Fall eine biaxial orientierte Polyesterfolie, die kein Antimon enthält und somit in Verpackungsanwendungen, bei denen die Folie in direktem Lebensmittelkontakt steht, eingesetzt werden kann.

Die Basisschicht (B") kann zusätzlich übliche Additive wie beispielsweise Stabilisatoren (UV, Hydrolyse), insbesondere aber Wärmestabilisatoren (z.B. Irganox 1010) oder weitere Füller (z.B. Farbpigmente), in den vom Hersteller empfohlenen Konzentrationen enthalten. Diese Additive werden zweckmäßig dem Polymer bzw. der Polymermischung bereits vor dem Aufschmelzen zugesetzt.

Die Basisschicht (B") enthält zusätzlich Regenerat, das bei der Herstellung der Folie in einer Menge von bis zu 60 Gew.-% der Extrusion zugeführt wird, ohne dass dabei die physikalischen, insbesondere aber die optischen Eigenschaften der Folie nennenswert negativ beeinflusst werden.

Wie zuvor bei der Unterfolie beschrieben, ist auch die Oberfolie beim sogenannten Cook-In-Verfahren einer erhöhten Wärmebelastung ausgesetzt.

Prozessbedingt wird dabei die Folie über einen Großteil ihrer Fläche wenig thermisch belastet. Nur im Randbereich der Packung und hier insbesondere an den Ecken der Packung (Siegelrand) findet eine deutlich erhöhte thermische Belastung der Folie statt. Während der übrige Teil der thermogeformten Folie durch das verdunstende Wasser Temperaturen deutlich unterhalb von 160 °C erfährt, wird der Eckenbereich der Packung der Ofentemperatur für die gesamte Garzeit ausgesetzt.

Im Extremfall wird dabei die Folie im Eckebereich über mehr als 2 h bei einer Temperatur von 220 °C thermisch belastet, wobei bei dieser erhöhten Temperatur Sauerstoff in das Polymere eindringen kann.

Als Folge hiervon kann es durchaus vorkommen, dass die Packung und damit die Folie insbesondere in den Ecken anfängt, spröde zu werden und zur Splitterbildung neigt. Dies ist äußerst unerwünscht und muss vermieden werden.

Ebenso wie für die Folie (A) beschrieben, enthält auch die Basisschicht (B") bevorzugt einen oder mehrere Radikalfänger, wenn eine erhöhte Thermostabilität gefordert wird. Der/Die Radikalfänger basieren bevorzugt auf phenolischen Antioxidantien.

Es wurde überraschend gefunden, dass die Folie, die einen oder mehrere Radikalfänger enthält, eine deutlich erhöhte Temperaturresistenz aufweist, so dass daraus hergestellte Verpackungen mehr als eine Stunde in einem Ofen bei Temperaturen von oberhalb 220 °C verbleiben können, ohne dabei zu verspröden.

In einer bevorzugten Ausführungsform enthält die Folie nach der vorliegenden Erfindung 400 -2000 ppm eines Radikalfängers, wobei der Gehalt bevorzugt zwischen 500 - 2000 ppm und insbesondere bevorzugt zwischen 600 - 2000 ppm liegt. Niedrigere Gehalte als 400 ppm führen tendenziell zu einem Versagen im Ofen (= Splitterbildung) und höhere Gehalte als 2000 ppm haben keine weitere verbessernde Wirkung auf die Folie und verringern daher nur die Wirtschaftlichkeit und können zu einer Migration des Stabilisators aus der Folie in ein verpacktes Lebensmittel führen. Gehalte oberhalb von 2000 ppm führen zudem tendenziell zur Bildung von Gelen und einem nicht gewünschten Gelbstich der Folie.

Als Radikalfänger kann sowohl eine Verbindung oder eine Mischung aus verschiedenen Radikalfängern eingesetzt werden, wobei es bevorzugt ist eine Verbindung als Radikalfänger einzusetzen. Der/die verwendete(n) Radikalfänger werden bevorzugt aus der Gruppe der phenolischen Antioxidantien ausgewählt.

Bevorzugte Radikalfänger sind pentaerythritol tetrakis [3-(3,5-di-tert-butyl-4-hydroxyphenyl)-propionate] (CAS-Nr. 6683-19-8) und 1,3,5-Trimethyl-2,4,6-tris(3,5-di-tert-butyl-4-hydroxybenzyl)-benzol) (CAS-Nr. 1709-70-2), erhältlich unter den Handelsnamen Irganox 1010 und Irganox 1330 der Firma BASF.

Die Wirksamkeit des Radikalfängers kann direkt an der Verpackung, z.B. nach Entnahme der Verpackung aus dem Ofen getestet werden. Die Verpackung wird dabei als gut (= für die Anwendung geeignet) bezeichnet, wenn an keiner Stelle der Folie nach der vorliegenden Erfindung ein Absplittern festgestellt werden

Die erfindungsgemäße siegelfähige Oberfolie (B) kann zwei- oder dreischichtig aufgebaut sein. Zur Erzielung der vorgenannten Eigenschaften, insbesondere der geforderten sehr guten optischen Eigenschaften der Polyesterfolie hat sich ein dreischichtiger Aufbau der Oberfolie (B) mit einem Aufbau aus den Schichten B'B"B'" als günstig erwiesen. Die erfindungsgemäße Oberfolie (B) umfasst dann die Basisschicht B", die siegelfähige Deckschicht B' auf der einen Seite der Basisschicht B" und die Deckschicht B'" auf der anderen Seite der Basisschicht B".

Die Dicke der Deckschicht B'" liegt im Allgemeinen zwischen 0,5 und 3 $\mu$m und besteht vorzugsweise aus dem Polyester der auch bei der Basisschichtschicht (B") zum Einsatz kommt, wobei sie vorzugsweise CHDM-frei ist.

Die Gesamtdicke der erfindungsgemäßen Polyesterfolie (B) kann innerhalb bestimmter Grenzen variieren. Sie beträgt 20 bis 125 $\mu$m, bevorzugt 25 bis 100 $\mu$m und besonders bevorzugt 30 bis 75 $\mu$m. Ist die Dicke der Folie (B) geringer als 20 $\mu$m, so sind die Mechanik und die Barriereeigenschaften der Folie nicht ausreichend. Ist die Dicke der Folie (B) dagegen größer als 125 $\mu$m, so verschlechtert sich die Siegelfähigkeit der Folie und außerdem wird die Herstellung der Folie unwirtschaftlich, was beides unerwünscht ist.

Die Erfindung betrifft daneben ein Verfahren zur Herstellung der erfindungsgemäßen Polyesterfolie (B) nach dem aus der Literatur bekannten Koextrusionsverfahren.

Im Rahmen dieses Verfahrens wird so vorgegangen, dass die den einzelnen Schichten (B'B" und, falls vorhanden, B'") der Oberfolie (B) entsprechenden Schmelzen durch eine Flachdüse koextrudiert werden, die so erhaltene Folie zur Verfestigung auf einer oder mehreren Walzen abgezogen wird, die Folie anschließend biaxial gestreckt und die biaxial gestreckte Folie thermofixiert wird.

Die biaxiale Verstreckung wird sequenziell durchgeführt. Dabei wird vorzugsweise erst in Längsrichtung (d.h. in Maschinenrichtung) und anschließend in Querrichtung (d.h. senkrecht zur Maschinenrichtung) verstreckt. Das Verstrecken in Längsrichtung lässt sich mit Hilfe mehrerer entsprechend dem angestrebten Streckverhältnis verschieden schnell laufenden Walzen durchführen. Zum Querverstrecken benutzt man allgemein einen entsprechenden Kluppenrahmen.

Zunächst werden, wie beim Koextrusionsverfahren üblich, die Polymere, bzw. die Polymermischungen, für die einzelnen Schichten in jeweiligen Extrudern komprimiert und verflüssigt, wobei die gegebenenfalls als Zusätze vorgesehenen Additive bereits im Polymer bzw. in der Polymermischung enthalten sein können. Die Schmelzen werden gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die Temperatur, bei der die Streckung durchgeführt wird, kann in einem relativ großen Bereich variieren und richtet sich nach den gewünschten Eigenschaften der Folie. Im Allgemeinen werden die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1, bevorzugt von 3,0:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie über eine Zeitdauer von etwa 0,1 bis 15 s bei einer Temperatur von ca. 160 bis 240 °C gehalten. Anschließend wird die Folie in üblicher Weise aufgewickelt.

*Erfindungsgemäßen Eigenschaften*

Die erfindungsgemäße siegelfähige Polyesterfolie (B), hergestellt nach dem erfindungsgemäßen Verfahren, besitzt eine Reihe von Eigenschaften, von denen untenstehend die wichtigsten aufgeführt sind.

Die Trübung der siegelfähigen Polyesterfolie (B) ist kleiner als 5,0 %. Bevorzugt beträgt die Trübung der Polyesterfolie weniger als 4,5 % und besonders bevorzugt weniger als 4,0 %.

Die Clarity der siegelfähigen Polyesterfolie (B) ist größer als 80 %. Bevorzugt beträgt die Clarity der Polyesterfolie mehr als 85 % und besonders bevorzugt mehr als 90 %.

Die Transparenz der siegelfähigen Polyesterfolie (B) ist größer als 89. Bevorzugt beträgt die Transparenz mehr als 90 und besonders bevorzugt mehr als 90,5.

Der Glanz der siegelfähigen Polyesterfolie (B) ist größer als 130, in der bevorzugten Ausführungsform größer als 140 und in der besonders bevorzugten Ausführungsform größer als 150.

Die Deckschicht (B') zeigt gute Siegeleigenschaften gegen sich selbst, insbesondere aber gegen die Unterfolie (A). Bei einer Siegeltemperatur von deutlich unter dem Schmelzpunkt der Basisschicht (B") haftet die Folie gut auf den genannten Materialien. Nach der Siegelung bei 200 °C (460 N, 2 s) ist die Siegelnahtfestigkeit der Deckschicht (B') gegen sich selbst und gegen die Unterfolie (A) größer als 2 N/15 mm und beträgt max. 7 N/15 mm.

Die Polyesterfolie (B) zeichnet sich durch ein sehr gutes Wickelverhalten aus.

Die Polyesterfolie (B) eignet sich hervorragend zum Verpacken von Nahrungs- und Genussmitteln, insbesondere zu der Verpackung von Nahrungs- und Genussmitteln in Menüschalen, bei denen siegelfähige Polyesterfolien zum Öffnen der Verpackung verwendet werden.

Die Tabelle 2 fasst u.a. die wichtigsten erfindungsgemäßen Folieneigenschaften zusammen.

*Tabelle 2*

| Deckschicht (B') der Oberfolie (B) | Erfindungsgemäßer Bereich | Bevorzugt | Besonders bevorzugt | Einheit | Messmethode |
|---|---|---|---|---|---|
| Anteil Polyester | ≥ 90 | ≥ 92 | ≥ 94 | Gew.-% | |
| Polyester I im Polyester der Deckschicht (B') | 85 bis 97 | 90 bis 97 | 92 bis 97 | Gew.-% | |
| Polyester II im Polyester der Deckschicht (*B*') | 3 bis 15 | 3 bis 10 | 3 bis 8 | Gew.-% | |
| SV-Wert von Polyester I | 680 bis 900 | 710 bis 880 | 740 bis 850 | | intern |
| Partikeldurchmesser $d_{50}$ | 1,5 bis 5,0 | 1,5 bis 4,5 | 1,5 bis 4,0 | $\mu m$ | intern |
| Füllstofikonzentration | 0,04 bis 0, 35 | 0,05 bis 0,30 | 0,06 bis 0,25 | % | intern |
| Verhältnis aus Teilchengröße $d_{50}$ und Schichtdicke | > 1,1 | > 1,1 | > 1,2 | | |
| Schichtdicke | 1,5 bis 4 | | | $\mu m$ | intern |
| **Eigenschaften Oberfolie (B)** | | | | | |
| Trübung der Folie | <5,0 | <4,5 | <4,0 | % | ASTM D 1003-61, Methode A |
| Clarity der Folie | >80 | >85 | >90 | % | ASTM D 1003 |
| Transparenz der Folie | >89 | >90 | >90,5 | | DIN 1033-77 |
| Glanz der Folie | >130 | >140 | >150 | | DIN 67530 |
| Siegelnahtfestigkeit (B') gegen sich selbst und gegen Unterfolie (A) | 2,0 bis 7,0 | 2,0 bis 6,5 | 2,0 bis 6,0 | N/15 mm | intern |
| Dicke der Folie | 20 bis 125 | 25 bis 100 | 30 bis 75 | $\mu m$ | |

**Definitionen und Vereinbarungen**

Unter heißsiegelbar (auch heißsiegelfähig) wird die Eigenschaft einer mehrschichtigen, mindestens eine Basisschicht (B) enthaltenden Polyester-Folie verstanden, die zumindest eine heißsiegelbare Deckschicht (A) enthält. Die heißsiegelbare Deckschicht (A) wird mittels Siegelbacken durch Anwendung von Wärme (110 bis 220 °C) und Druck (1 bis 6 bar) in einer bestimmten Zeit (0,1 bis 4 sec) mit einem Substrat aus thermoplastischem Kunststoff, z.B. Menüschalen aus Polyester oder aus APET, verbunden, ohne dass dabei die Basisschicht (B) selbst plastisch wird. Um dies zu erreichen, besitzt das Polymere der Deckschicht (A) im Allgemeinen einen deutlich niedrigeren Schmelzpunkt als das Polymere der Basisschicht. Wird als Polymeres für die Basisschicht beispielsweise Polyethylenterephthalat mit einem Schmelzpunkt von 254 °C verwendet, so beträgt der Schmelzpunkt der heißsiegelbaren Deckschicht (A) im Allgemeinen deutlich weniger als 220 °C. Im vorliegenden Fall ist das Hauptpolymere für die siegelfähige Deckschicht der Oberfolie nahezu zu 100 % amorph.

Zur Charakterisierung der Rohstoffe und der Folien wurden im Rahmen der vorliegenden Erfindung die folgenden Messmethoden benutzt.

**Messmethoden**

**E-Modul**

Der E-Modul wird gemäß DIN EN ISO 527-1 und -3 (Probekörper Typ 2) an 100 mm x 15 mm großen Folienstreifen bestimmt. Der Flächen E-Modul wird gemäß folgender Formel berechnet

$$E_{Fläche} = \sqrt{(E_{MD}{}^2 + E_{TD}{}^2)}$$

**$\sigma_5$-Wert**

Der $\sigma_5$-Wert wird gemäß DIN EN ISO 527-1 und -3 (Probekörper Typ 2) an 100 mm x 15 mm großen Folienstreifen bestimmt.

**Dichte**

Die Dichte der Folie wird nach ASTM-D 1505-68, Methode C, bestimmt.

**Trübung, Clarity** und **Transparenz**

Die Messung an den Polyesterfolien erfolgt am Hazegard Hazemeter XL-211 der Fa. BYK Gardner. Die Trübung nach Hölz wurde nach ASTM-D 1003-61, Methode A, bestimmt. Die Messung der Clarity geschieht nach ASTM-D 1003 mittels Hazeguard, jedoch jetzt am "clarity port" des Messgerätes. Die Messung der Transparenz geschieht nach ASTM-D 1033-61, Methode A. Die Messungen werden sämtlich direkt nach Herstellung an der Folie durchgeführt.

**Glanz 20°**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird ein Einstrahlwinkel von 20 ° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**Standardviskosität SV**

Die Standardviskosität in verdünnter Lösung SV wurde, angelehnt an DIN 53 728 Teil 3, in einem Ubbelohde Viskosimeter bei (25 ± 0,05) °C gemessen. Dichloressigsäure (DCE) wurde als Lösemittel verwendet. Die Konzentration des gelösten Polymers betrug 1 g Polymer / 100 mL reines Lösemittels. Die Auflösung des Polymers erfolgte 1 Stunde bei 60 °C. Wurden die Proben nach dieser Zeit nicht vollständig gelöst, wurden noch bis zwei Auflösungsversuche jeweils 40 Min bei 80 °C durchgeführt und die Lösungen anschließend 1 Stunde bei einer Drehzahl von 4100 min[-1] zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = \frac{(\text{Einwaage entsprechend 100 \% Polymer})}{[(100 - \text{Partikelgehalt in Gew.-\%}) \cdot 0{,}01]}$$

**Mittlerer Partikeldurchmessers $d_{50}$**

Die Bestimmung des mittleren Durchmessers $d_{50}$ wird mittels Malvern Master Sizer 2000 am einzusetzenden Partikel durchgeführt. Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert.
Messungen an der mittels dieser Partikel hergestellten Folie ergeben einen um 15 - 25 % niedrigeren $d_{50}$ Wert als die eingesetzten Partikel.

**Durchstoßfestigkeit** ($\approx$ Durchstichversuch)

Die Durchstoßfestigkeit ($\approx$ Durchstichversuch) wird nach EN 14477 gemessen. Im Verpackungsbereich ist die Beanspruchung mit harten, spitzen oder kantigen Gegenständen eine wichtige Größe, Die Kenntnis der Durchstoßfestigkeit ist dann interessant, wenn die Folien als Verpackungsmaterial z. B. für Lebensmittel oder für scharfkantige Teile verwendet werden. Mit dem Durchstichversuch nach EN 14477 wird dieses Verhalten gegenüber einer Spitze mit 0,8 mm Durchmesser gemessen. Dieser Versuch ist auch als Parken Pen Test / Parker Kugelschreiber Prüfung bekannt.

**Bestimmung der Thermoformeigenschaften**

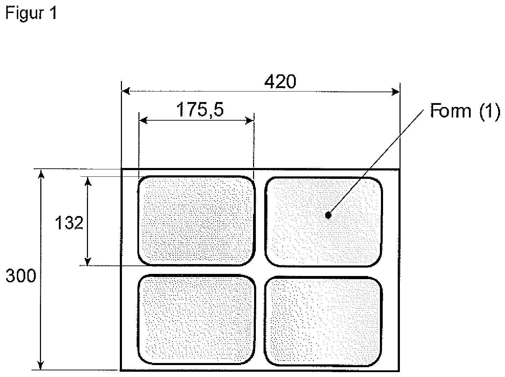

Zur Bestimmung der Thermoformeigenschaften der Unterfolie (A) wurde diese auf einer Multivac Maschine (z.B. R245 / SN:166619) unter den Formbedingungen (Formtemperaturen 210 °C, Zeit Anheizen: 2 - 3 s, Explosionsverformung / Druckluftspeicher 2 bar, Formdruck 2 bar getestet, Formen: 2 s) tiefgezogen. Die eingestellten Formate für die herzustellenden Schalen sind der Figur 1 zu entnehmen. Die beiden Eigenschaften, die die Tiefziehbarkeit der erfindungsgemäßen Folie kennzeichnen sind

- Der maximale Tiefzug in mm der erfindungsgemäßen Unterfolie (= Tiefe der Schale) und das
- Tiefzugverhältnis von $A_{Schale}/A_{Folie}$ ($A_{Schale}$ = Oberfläche der tiefgezogenen Schale, $A_{Folie}$ = Oberfläche der eingesetzten, erfindungsgemäßen, Folie)

**Bestimmung der Barriereeigenschaften**

Die Wasserdampfdurchlässigkeit (WVTR) wurde an unterschiedlich dicken Folien bei 23 °C und 85 % r. F. nach ISO 15106-3 gemessen. Die Messung der Sauerstoffbarriere (OTR) erfolgte mit einem OXTRAN® 100 von Mocon Modern Controls (USA) nach ISO 15105-2, Annex A, 23,0 °C / 50 % r.F. Die Messung der OTR erfolgte dabei ebenfalls an unterschiedlich dicken Folien.

**Siegelnahtfestigkeit (DIN 55529)**

Zur Bestimmung der Siegelnahtfestigkeit der Oberfolie (B) gegenüber sich selbst wurden zwei 15 mm breite Folienstreifen der erfindungsgemäßen Folie aufeinander gelegt und bei 200 °C, einer Zeit von 3 s und einem "Siegeldruck" von 460 N (Gerät: Brugger Typ NDS, einseitig beheizte Siegelbacke) zusammengepresst. Um das Kleben an der Siegelbacke zu vermeiden, wurde eine 12 $\mu$m dicke kristalline Polyesterfolie zwischen der erfindungsgemäßen Folie und der Siegelbacke gelegt. Die Siegelnahtfestigkeit (Höchstkraft) wurde unter einem Abzugswinkel von 90 ° (90 °-Peel-Methode) mit einer Geschwindigkeit von 200mm/min bestimmt.

Zur Bestimmung der Siegelnahtfestigkeit der Oberfolie (B) gegenüber der Unterfolie (A) wurde ein 15 mm breiter Folienstreifen mit der amorphen Seite auf einen gleichgroßen Streifen der Unterfolie (A) gelegt. Die Siegelnahtfestigkeit (Höchstkraft) wurde aufgrund der Steifigkeit des Substrats unter einem Abzugswinkel von 180 ° bestimmt. Von einer Siegelung kann man sprechen, wenn die gemessene Kraft > 1 N/15 mm ist.

Im Folgenden wird die Erfindung anhand von Beispielen näher erläutert.

**Beispiel 1**

**I Herstellung der thermoformbaren Unterfolie (A)**

Es wurde nach dem erfindungsgemäßen Verfahren eine biaxial orientierte Folie (A) aus einem Etylenterephthalat-Ethylenisophthalat-Copolymeren hergestellt. Die Dicke der Folie betrug 96 μm. Dazu wurden Chips aus dem Copolymeren dem Extruder für die Herstellung der Unterfolie zugeführt. Entsprechend den in untenstehender Tabelle aufgeführten Verfahrensbedingungen wurde das Copolymere im Extruder aufgeschmolzen und homogenisiert.

Nach Filtration wurde in einer Breitschlitzdüse die Schmelze ausgeformt und über die Düsenlippe ausgestoßen. Der Schmelzfilm wurde abgekühlt und über eine stufenweise Orientierung in Längs- und Querrichtung mit anschließender Fixierung, eine transparente, einschichtige Folie hergestellt.

Zur Erzielung einer guten Wickelung der Folie wurde zwischen der Längs- und der Querstreckung die Folie mittels Reversgravurverfahren aus einer wässrigen Dispersion heraus beschichtet. Die im Kluppenrahmen acrylisch vernetzte Beschichtung (C) enthält eine 4,5 Gew.-%ige Dispersion eines Latex, bestehend aus einem Copolymeren aus 60 Gew.-% Methylmethacrylat, 35 Gew.-% Ethylacrylat und 5 Gew.-% N-Methylolacrylamid und einem Tensid. Das Trockengewicht der Beschichtung (bezogen auf die biaxial orientierte Folie) betrug ca. 0,035 g/m$^2$

Das Copolymere für die erfindungsgemäße Unterfolie (A) ist wie folgt zusammengesetzt

89 Mol-% Ethylenterephthalat-Einheiten
11 Mol-% Ethylenisophthalat-Einheiten

Die Herstellungsbedingungen in den einzelnen Verfahrensschritten waren

| | | | |
|---|---|---|---|
| Extrusion | Temperaturen für die Schmelze (A) | 270 | °C |
| | Temperatur der Abzugswalze | 20 | °C |
| Längsstreckung | Aufheiztemperatur der Walzen | 70-90 | °C |
| | Strecktemperatur | 86 | °C |
| | Längsstreckverhältnis | 3,0 | |
| Querstreckung | Temperatur der Aufheizfelder | 118 | °C |
| | Strecktemperatur | 135 | °C |
| | Querstreckverhältnis | 3,4 | |
| Fixierung | Temperatur | 185 | °C |
| | Dauer | 9 | s |

In Tabelle 3 sind die Zusammensetzung der Unterfolie (A), sowie weitere Informationen zur erfindungsgemäßen Folie, insbesondere zu den Eigenschaften der erfindungsgemäßen Folie, dargestellt.

**II Herstellung der siegelfähigen Oberfolie (B)**

Zur Herstellung der nachfolgend beschriebenen, siegelfähigen Oberfolie (B) wurden für die einzelnen, koex-trudierten Schichten (B′B″B‴) die folgenden Ausgangsmaterialien verwendet

**Deckschicht B'**

| 95 Gew.-% | Amorpher Polyester I aus 67 Mol-% Ethylenterephthalat und 33 Mol.-% Cyclohexandimethylenterephthalat mit einem SV-Wert von 780 (vgl. auch: "Broschüre von Eastman, Eastman™ 6763 Copolyester Thermoforming") |
| 5 Gew.-% | Teilkristalliner Polyester II (100 Mol-% Ethylenterephthalat) und 1,5 Gew.-% Sylobloc 46 (synthetisches $SiO_2$ der Fa. Grace, $d_{50}$: 3,2 μm) |

**Basisschicht B″**

| 100 Gew.-% | Polyethylenterephthalat mit einem SV-Wert von 800 |

**Deckschicht B‴**

| 95 Gew.-% | Polyethylenterephthalat |
| 5 Gew.-% | 98,5 Gew.-% Polyethylenterephthalat und 1,5 Gew.-% Sylobloc 46 |

Die o.g. Rohstoffe wurden in je einem Extruder pro Schicht aufgeschmolzen und durch eine dreischichtige Breitschlitzdüse mit dem Aufbau A-B-C auf eine gekühlte Abzugswalze extrudiert. Die so erhaltene amorphe Vorfolie wurde dann längsverstreckt. Danach wurde die Folie quergestreckt, fixiert und aufgerollt (Enddicke der Folie 42 μm). Die Herstellungsbedingungen in den einzelnen Verfahrensschritten waren

| Extrusion | Temperaturen für die Schmelzen (B' B"B'") | 270 | °C |
| | Temperatur der Abzugswalze | 20 | °C |
| Längsstreckung (Spiegelstreckung) | Aufheiztemperatur der Walzen Strecktemperatur | 80-120 115 | °C °C |
| | Längsstreckverhältnis | 4,0 | |
| Querstreckung | Temperatur der Aufheizfelder | 80-135 | °C |
| | Strecktemperatur | 135 | °C |
| | Querstreckverhältnis | 4,2 | |
| Fixierung | Temperatur | 230 | °C |
| | Dauer | 3 | s |

In der Tabelle 4 sind die Zusammensetzung der Folie, sowie weitere Informationen zur erfindungsgemäßen Folie, insbesondere zu den Eigenschaften der erfindungsgemäßen Folie, dargestellt.

**III Herstellung der Verpackung**

Die Unterfolie (A) und die Oberfolie (B) wurden jeweils für sich in eine Multivac-Maschine (R 245/SN:166619) eingespannt. Die Unterfolie (A) wurde unter den Formbedingungen (Formtemperaturen 210 °C, Zeit Anheizen: 2 - 3 s, Explosionsverformung / Druckluftspeicher 2 bar, Formdruck 2 bar getestet, Formen: 2 s) tiefgezogen. Die eingestellten Formate für die herzustellenden Schalen sind der Figur 1 zu entnehmen. Der Tiefzug der Unterfolie (A) betrug bis zu 75 mm, das Tiefzugverhältnis bis zu 2,86.

Die Form wurde abgekühlt und die thermogeformte Unterfolie (A) aus der Form ausgestoßen. Eine Portion Schweinefleisch wurde in den Hohlraum gelegt und die Oberfolie (B) auf die Oberseite der Unterfolie (A) gebracht. Dabei wurde die Oberfolie (B) so auf die Unterfolie (A) gebracht, dass die heißsiegelbare Oberfläche (B') der Oberfolie (B) in Kontakt mit der Portion Fleisch und der Unterfolie (A) war. Die Heißversiegelung wurde auf der gleichen Maschine bei einer Temperatur von 160 °C, 2 s bei einem Druck von 2 bar durchgeführt. Die Portion Fleisch hatte ein Gewicht von etwa 1000 g. Die Packung wurde in einen herkömmlichen Ofen gegeben und bei 220 °C für 60 Minuten gegart. Nach ca. 10 min wurde das gewünschte self-venting beobachtet. Nach Beendigung des Garzyklus wurde die Oberfolie (B) von der Unterfolie (A) der Verpackung manuell abgezogen, ohne dass dabei eine der beiden Folien einriss. Das Fleisch war gegart und kusprig braun geworden.

**Beispiel 2**

Gegenüber Beispiel 1 wurde nur der Herstellprozess für die Unterfolie (A) modifiziert. Die Konvergenz in der Fixierung betrug jetzt 1,75 %, im Beispiel 1 betrug sie 0 %. Das Gesamtresultat war ähnlich, die Durchstoßfestigkeit der Unterfolie (A) war leicht erhöht.

**Vergleichsbeispiel 1**

Im Vergleich zu Beispiel 1 wurde in der Unterfolie (A) der Anteil von Isophthalat auf 5,0 Mol.-% herabgesetzt; sonst alles gleichgelassen.

**Vergleichsbeispiel 2**

Es wurde das Beispiel 1 aus der EP 1 697 129 B1 nachgearbeitet. In Tabelle 4 sind die Eigenschaften der Folie dargestellt. Das Laminat ist für die eingangs genannten Anwendungen geeignet, es ist aber verbesserungswürdig in der Thermoformbarkeit, der Durchstoßfestigkeit, vor allem aber verbesserungswürdig in der Optik (Haze und Clarity).

**Vergleichsbeispiel 3**

Es wurde das Beispiel 1 aus der EP 1 945 512 B1 nachgearbeitet. Das Verfahren ist für die eingangs genannten Anwendungen geeignet; die in der EP 1 945 512 B1 näher beschriebenen Folien sind aber verbesserungswürdig in der Thermoformbarkeit, der Durchstoßfestigkeit, vor allem aber verbesserungswürdig in der Optik (Haze und Clarity)

## Tabelle 3 – Unterfolie (A)

| | Zusammensetzung Polyester für Folie | | | E-Modul der Folie | | Flächen E-Modul | σ5-Wert der Folie | | Summe der σ5-Werte | Dichte | Trübung der Folie | Clarity der Folie | Glanz der Folie | | Trans parenz | SV-Wert der Folie | Durchstoßf estigkeit | Tiefziehfähigkeit | | Barriereeigenschaften der Folie | | Wickelverh alten |
|---|---|---|---|---|---|---|---|---|---|---|---|---|---|---|---|---|---|---|---|---|---|---|
| | TS | IS | EG | längs | quer | | längs | quer | | | | | A-Seite | B-Seite | | | | Tiefe | $A_{Schale}/A_{Folie}$ | OTR | WVTR | |
| | Mol-% | | | N/mm$^2$ | | | | | | | % | % | | | % | | | mm | | cm$^3$/(m$^2$ x bar x d) | g/(m$^2$ x d) | |
| Beispiele 1 | 89 | 11 | 100 | 3874 | 4479 | 5922 | 98 | 99 | 197 | 1,385 | 0,4 | 100 | 205 | 205 | 90 | 777 | 0,395 | 75 | 2,86 | 16 | 1,89 | sehr gut |
| Beispiele 2 | 89 | 11 | 100 | 3843 | 4294 | 5763 | 94 | 103 | 197 | 1,286 | 0,4 | 100 | 204 | 203 | 91 | 777 | 0,398 | 75 | 2,86 | 16 | 1,89 | sehr gut |
| V-Beispiele 1 | 95 | 5 | 100 | 4110 | 4569 | 6146 | 103 | 100 | 203 | 1,392 | 0,4 | 100 | 215 | 214 | 91 | 787 | 0,36 | 55 | 2,00 | | | sehr gut |
| V-Beispiele 2 | 76,2µm PA+ 25,4µm APET | | | | | | | | | | 17 | 75 | 74 | 76 | 88 | | | 65 | 2,00 | | | |
| V-Beispiele 3 | 50 µm Polyester | | | 4175 | 4175 | 5904 | | | | | 5 | | 120 | 120 | 90 | | | 55 | 2,00 | | | |

## Tabelle 4 – Oberfolie (B)

| | | Zusammensetzung Copolyester I in Deckschicht B' | | | | Zusammensetzung Polyester II in Deckschicht B' | | | SV-Wert Polyester I | Folien-aufbau | Folien-dicke | Deckschicht-Dicken | | Partikel in Deckschicht B' | | Verhältnis $d_{50}/d_{(B')}$ | Sieglenaht-festigkeit (FIN und gegen Unterfolie A) | Trü-bung | Clarity | Trans-parenz | Glanz |
|---|---|---|---|---|---|---|---|---|---|---|---|---|---|---|---|---|---|---|---|---|---|
| | | TS | IS | EG | CHDM | TS | IS | EG | | | B | B' | B''' | Durch-messer | Konzen-tration | | 200 °C | | | | |
| | | Mol-% | | | | Mol-% | | | | | µm | µm | | µm | % | | N/15mm | % | % | % | |
| Beispiele | 1 | 100 | | 70 | 30 | 100 | | 100 | 780 | B'B''B''' | 42 | 2,7 | 2 | 3,2 | 0,075 | 1,19 | 3 | 2,5 | 87 | 90,5 | 170 |
| | 2 | 100 | | 70 | 30 | 100 | | 100 | | B'B''B''' | 42 | 2,7 | 2 | 3 | 0,075 | 1,11 | 3 | 2,5 | 87 | 90,5 | 168 |
| V-Beispiele | 1 | 100 | | 70 | 30 | 100 | | 100 | | B'B''B''' | 42 | 2,7 | 2 | 3 | 0,075 | 1,11 | 3 | 2,5 | 87 | 90,5 | 168 |
| | 2 | | | | | | | | | | | | | | | | | | | | |
| | 3 | | | | | | | | | | | | | | | | | | | | |

TS Terephthalat, IS Isophthalat, EG Ethylen, CHDM 1,4-Cyclohexandimethanol

**Patentansprüche**

1. Transparente Verpackung für die Vakuumverformung, umfassend eine biaxial orientierte, thermoformbare Polyesterfolie als Unterfolie (A) und eine biaxial orientierte Polyesterfolie als Oberfolie (B), die zur Unterfolie (A) heißsiegelbar ist,
wobei

I. die Unterfolie (A) eine Folie ist, die zu mindestens 85 Gew.-% einen Copolyester umfasst, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Unterfolie durch Koextrusion, biaxiales Strecken der Unterfolie (A) in Längsrichtung bei einer Temperatur zwischen 70 ° und 100 °C mit einem Längsstreckverhältnis von 2,2:1 bis 3,8:1, und in Querrichtung bei einer Temperatur zwischen 90 ° und 140 °C mit einem Querstreckverhältnis von 2,2:1 bis 3,8:1, sowie Thermofixierung für 5 bis 25 s bei 175 ° bis 220 °C hergestellt wird, und wobei die Unterfolie

a) einen Flächen-E-Modul im Bereich von 4500 bis 6400 N/mm$^2$, bestimmt gemäß Formel (I)

$$E_{Fläche} = \sqrt{(E_{MD}{}^2 + E_{TD}{}^2)} \ \ (I),$$

wobei

$E_{MD}$ der E-Modul der Folie, gemessen in Längsrichtung der Maschine ist und
$E_{TD}$ der E-Modul der Folie, gemessen in Querrichtung der Maschine ist

b) eine Summe der Festigkeiten ($\sigma_5$-Wert) in Längsrichtung und in Querrichtung im Bereich von 170 bis 220 MPa, bestimmt gemäß DIN EN ISO 527-1 und -3
c) eine Dichte von kleiner 1390 kg/m$^3$, bestimmt gemäß ASTM-D 1505-68, Methode C,
d) eine Trübung von weniger als 2,0 %, bestimmt gemäß ASTM-D 1003-61, Methode A, und eine Clarity von mindestens 85 %, bestimmt gemäß ASTM-D 1003, und
e) eine Dicke im Bereich von 50 bis 300 $\mu$m, aufweist;

und
II. die Oberfolie (B) eine Folie ist, die eine Basisschicht (B") und eine gegenüber der Unterfolie (A) heißsiegelbare Deckschicht (B') enthält, wobei die heißsiegelbare Deckschicht (B') zu mindestens 90 Gew.-% einen thermoplastischen Polyester umfasst, der zu

a) 85 bis 97 Gew.-% aus amorphem Polyester I und zu
b) 3 bis 15 Gew.-% aus teilkristallinem Polyester II aufgebaut ist
c) die heißsiegelbare Deckschicht (B') 0,04 bis 0,35 Gew.-% anorganische und/oder organische Partikel mit einem mittleren Durchmesser d$_{50}$ von 1,5 bis 5,0 $\mu$m enthält, wobei das Verhältnis aus Teilchengröße dso und Schichtdicke der Deckschicht (B') größer 1,0 ist
d) die Schichtdicke der Deckschicht (B') 1,5 bis 4,0 $\mu$m beträgt
e) die Oberfolie eine Trübung von weniger als 5,0 %, bestimmt gemäß ASTM-D 1003-61, Methode A, und eine Clarity von mindestens 85 %,bestimmt gemäß ASTM-D 1003, besitzt
f) eine Siegelnahtfestigkeit zu sich selbst (= Finsiegelung) und zur Unterfolie (A) aufweist, die im Bereich von 2 bis 7 N/15 mm, bestimmt gemäß DIN 55529, liegt und
g) eine Dicke im Bereich von 20 bis 125 $\mu$m, aufweist.

2. Transparente Verpackung für die Vakuumverformung nach Anspruch 1, wobei die Unterfolie (A) einen Flächen E-Modul im Bereich von 4500 bis 6300 N/mm$^2$, bestimmt gemäß Formel (I)

$$E_{Fläche} = \sqrt{(E_{MD}{}^2 + E_{TD}{}^2)} \ \ (I),$$

wobei

$E_{MD}$ der E-Modul der Folie, gemessen in Längsrichtung der Maschine ist und
$E_{TD}$ der E-Modul der Folie, gemessen in Querrichtung der Maschine ist, aufweist.

3. Transparente Verpackung nach Anspruch 1 oder 2, wobei die Unterfolie (A) und/oder die Basisschicht (B") einen oder mehrere Radikalfänger enthält.

4. Transparente Verpackung nach Anspruch 3, wobei der/die Radikalfänger aus der Gruppe der phenolischen Antioxidantien ausgewählt ist/sind, bevorzugt aus der Gruppe bestehend aus pentaerythritol tetrakis [3-(3,5-di-tert-butyl-4-hydroxyphenyl)-propionate] und 1,3,5-Trimethyl-2,4,6-tris(3,5-di-tert-butyl-4-hydroxybenzyl)-benzol).

5. Transparente Verpackung nach einem oder mehreren der Ansprüche 1 bis 4, wobei die Unterfolie (A) und die Oberfolie (B) antimonfrei sind.

6. Biaxial orientierte, thermoformbare Polyesterfolie als Unterfolie (A) für eine transparente Verpackung umfassend zu mindestens 85 Gew.-% einen Copolyester, dessen Dicarbonsäure-Komponenten zu 85 bis 94 Mol-% auf Terephthalsäure abgeleitete Einheiten und zu 6 bis 15 Mol-% auf Isophthalsäure abgeleitete Einheiten zurückzuführen sind, wobei die Unterfolie durch Koextrusion, biaxiales Strecken der Unterfolie (A) in Längsrichtung bei einer Temperatur zwischen 70 ° und 100 °C mit einem Längsstreckverhältnis von 2,2:1 bis 3,8:1, und in Querrichtung bei einer Temperatur zwischen 90 ° und 140 °C mit einem Querstreckverhältnis von 2,2:1 bis 3,8:1, sowie Thermofixierung für 5 bis 25 s bei 175 ° bis 220 °C hergestellt wird, und wobei die Unterfolie

a) einen Flächen-E-Modul im Bereich von 4500 bis 6400 N/mm$^2$, bestimmt gemäß Formel (I)

$$E_{Fläche} = \sqrt{(E_{MD}{}^2 + E_{TD}{}^2)} \;\; (\text{I}),$$

wobei

$E_{MD}$ der E-Modul der Folie, gemessen in Längsrichtung der Maschine ist und
$E_{TD}$ der E-Modul der Folie, gemessen in Querrichtung der Maschine ist

b) eine Summe der Festigkeiten ($\sigma_5$-Wert) in Längsrichtung und in Querrichtung im Bereich von 170 bis 220 MPa, bestimmt gemäß DIN EN ISO 527-1 und -3
c) eine Dichte von kleiner 1390 kg/m$^3$, bestimmt gemäß ASTM-D 1505-68, Methode C,
d) eine Trübung von weniger als 2,0 %, bestimmt gemäß ASTM-D 1003-61, Methode A, und eine Clarity von mindestens 85 %, bestimmt gemäß ASTM-D 1003, und
e) eine Dicke im Bereich von 50 bis 300 μm, autweist.

7. Biaxial orientierte, thermoformbare Polyesterfolie nach Anspruch 6, wobei die Unterfolie (A) einen Flächen-E-Modul im Bereich von 4500 bis 6300 N/mm$^2$, bestimmt gemäß Formel (I)

$$E_{Fläche} = \sqrt{(E_{MD}{}^2 + E_{TD}{}^2)} \;\; (\text{I}),$$

wobei

$E_{MD}$ der E-Modul der Folie, gemessen in Längsrichtung der Maschine ist und
$E_{TD}$ der E-Modul der Folie, gemessen in Querrichtung der Maschine ist, aufweist.

8. Biaxial orientierte, thermoformbare Polyesterfolie als Oberfolie (B) für eine transparente Verpackung umfassend eine Basisschicht (B") und eine heißsiegelbare Deckschicht (B'), wobei die heißsiegelbare Deckschicht (B') zu mindestens 90 Gew.-% einen thermoplastischen Polyester umfasst, der zu

a) 85 bis 97 Gew.-% aus amorphem Polyester I und zu
b) 3 bis 15 Gew.-% aus teilkristallinem Polyester II aufgebaut ist
c) die heißsiegelbare Deckschicht (B') 0,04 bis 0,35 Gew.-% anorganische und/oder organische Partikel mit einem mittleren Durchmesser dso von 1,5 bis 5,0 $\mu$m enthält, wobei das Verhältnis aus Teilchengröße $d_{50}$ und Schichtdicke der Deckschicht (B') größer 1,0 ist

d) die Schichtdicke der Deckschicht (B') 1,5 bis 4,0 $\mu$m beträgt

e) die Oberfolie eine Trübung von weniger als 5,0 %, bestimmt gemäß ASTM-D 1003-61, Methode A und eine Clarity von mindestens 85 %, bestimmt gemäß ASTM-D 1003, besitzt

f) eine Siegelnahtfestigkeit zu sich selbst (= Finsiegelung) aufweist, die im Bereich von 2 bis 7 N/15 mm liegt, bestimmt gemäß DIN 55529, und

g) eine Dicke im Bereich von 20 bis 125 $\mu$m, aufweist.

9. Verfahren zur Herstellung einer transparenten Verpackung für die Vakuumverformung nach einem oder mehreren der Ansprüche 1 bis 5, **gekennzeichnet durch**

Herstellung der Unterfolie durch Extrusion (Herstellung von Schicht (A)) oder Koextrusion, biaxiales Strecken der Unterfolie (A) in Längsrichtung bei einer Temperatur zwischen 70 ° und 100 °C mit einem Längsstreckverhältnis von 2,2:1 bis 3,8:1, und in Querrichtung bei einer Temperatur zwischen 90 ° und 140 °C mit einem Querstreckverhältnis von 2,2:1 bis 3,8:1, sowie Thermofixierung für 5 bis 25 s bei 175 ° bis 220 °C; Koextrusion der den einzelnen Schichten (B'B" und, falls vorhanden, B''') der Oberfolie (B) entsprechenden Schmelzen durch eine Flachdüse, Abziehen der so erhaltene Folie auf einer oder mehreren Walzen zur Verfestigung, und anschließende biaxiale Streckung und Thermofixierung der Folie.

10. Verwendung der transparenten Verpackung für die Vakuumverformung nach einem oder mehreren der Ansprüche 1 bis 5 als Menüschale, insbesondere für Fleisch, Fisch, Geflügel und trockene (Fertig-) Produkte wie Sandwiches, Burger oder Wraps.

## Claims

1. Transparent packaging for vacuum forming, comprising a biaxially oriented, thermoformable polyester foil as lower foil (A) and a biaxially oriented polyester foil as upper foil (B) which is heat-sealable to the lower foil (A), where

I. the lower foil (A) is a foil comprising at least 85 % by weight of a copolyester having dicarboxylic acid components of which from 85 to 94 mol% are terephthalic acid-derived units and from 6 to 15 mol% are isophthalic acid-derived units, where the lower foil is produced by coextrusion, biaxial stretching of the lower foil (A) in longitudinal direction at a temperature between 70 ° and 100 °C with a longitudinal stretching ratio of 2.2:1 to 3.8:1, and in transverse direction at a temperature between 90 ° and 140 °C with a transverse stretching ratio of 2.2:1 to 3.8:1, and heat setting for 5 to 25 s at 175 ° to 220 °C, and where the lower foil has the following:

a) an area modulus of elasticity in the range from 4500 to 6400 N/mm$^2$, determined according to formula (I)

$$E_{area} = \sqrt{\left(E_{MD}{}^2 + E_{TD}{}^2\right)} \quad (I) ,$$

where

$E_{MD}$ is the modulus of elasticity of the foil measured in longitudinal direction of the machine, and
$E_{TD}$ is the modulus of elasticity of the foil measured in transverse direction of the machine,

b) a total of strength values ($\sigma_5$ value) in longitudinal direction and in transverse direction in the range from 170 to 220 MPa, determined in accordance with DIN EN ISO 527-1 and -3,

c) a density below 1390 kg/m$^3$, determined in accordance with ASTM-D 1505-68, Method C,

d) a haze below 2.0 %, determined in accordance with ASTM-D 1003-61, Method A, and a clarity of at least 85 %, determined in accordance with ASTM-D 1003, and

e) a thickness in the range from 50 to 300 $\mu$m;

and

II. the upper foil (B) is a foil comprising a base layer (B") and an outer layer (B') which is heat-sealable with respect to the lower foil (A), where the heat-sealable outer layer (B') comprises at least 90 % by weight of a thermoplastic polyester composed of

> a) from 85 to 97 % by weight of amorphous polyester I and
> b) from 3 to 15 % by weight of semicrystalline polyester II,
> c) the heat-sealable outer layer (B') comprises from 0.04 to 0.35 % by weight of inorganic and/or organic particles with a median diameter $d_{50}$ of 1.5 to 5.0 $\mu$m, where the ratio of particle size $d_{50}$ to layer thickness of the outer layer (B') is greater than 1.0,
> d) the layer thickness of the outer layer (B') is from 1.5 to 4.0 $\mu$m,
> e) the haze of the upper foil is below 5.0 %, determined in accordance with ASTM-D 1003-61, Method A, and its clarity is at least 85 %, determined in accordance with ASTM-D 1003,
> f) its seal seam strength with respect to itself (= fin sealing) and with respect to the lower foil (A) is in the range from 2 to 7 N/15 mm, determined in accordance with DIN 55529, and
> g) its thickness is in the range from 20 to 125 $\mu$m.

2. Transparent packaging for vacuum forming according to Claim 1, where the lower foil (A) has an area modulus of elasticity in the range from 4500 to 6300 N/mm², determined according to formula (I)

$$E_{area} = \sqrt{\left(E_{MD}^2 + E_{TD}^2\right)} \quad (I),$$

where

> $E_{MD}$ is the modulus of elasticity of the foil measured in longitudinal direction of the machine, and
> $E_{TD}$ is the modulus of elasticity of the foil measured in transverse direction of the machine.

3. Transparent packaging according to Claim 1 or 2, where the lower foil (A) and/or the base layer (B") comprise(s) one or more free-radical scavengers.

4. Transparent packaging according to Claim 3, where the free-radical scavenger(s) is/are selected from the group of the phenolic antioxidants, preferably from the group consisting of pentaerythritol tetrakis(3-(3,5-di-tert-butyl-4-hydroxyphenyl)-propionate] and 1,3,5-trimethyl-2,4,6-tris(3,5-di-tert-butyl-4-hydroxybenzyl) benzene.

5. Transparent packaging according to one or more of Claims 1 to 4, where the lower foil (A) and the upper foil (B) are antimony-free.

6. Biaxially oriented, thermoformable polyester foil as lower foil (A) for a transparent packaging comprising at least 85 % by weight of a copolyester having dicarboxylic acid components of which from 85 to 94 mol% are terephthalic acid-derived units and from 6 to 15 mol% are isophthalic acid-derived units, where the lower foil is produced by coextrusion, biaxial stretching of the lower foil (A) in longitudinal direction at a temperature between 70 ° and 100 °C with a longitudinal stretching ratio of 2.2:1 to 3.8:1, and in transverse direction at a temperature between 90 ° and 140 °C with a transverse stretching ratio of 2.2:1 to 3.8:1, and heat setting for 5 to 25 s at 175 ° to 220 °C, and where the lower foil has the following:

> a) an area modulus of elasticity in the range from 4500 to 6400 N/mm², determined according to formula (I)

$$E_{area} = \sqrt{\left(E_{MD}^2 + E_{TD}^2\right)} \quad (I),$$

where

> $E_{MD}$ is the modulus of elasticity of the foil measured in longitudinal direction of the machine, and
> $E_{TD}$ is the modulus of elasticity of the foil measured in transverse direction of the machine,

> b) a total of strength values ($\sigma_5$ value) in longitudinal direction and in transverse direction in the range from 170 to 220 MPa, determined in accordance with DIN EN ISO 527-1 and -3,

c) a density below 1390 kg/m$^3$, determined in accordance with ASTM-D 1505-68, Method C,

d) a haze below 2.0 %, determined in accordance with ASTM-D 1003-61, Method A, and a clarity of at least 85 %, determined in accordance with ASTM-D 1003, and

e) a thickness in the range from 50 to 300 $\mu$m.

7. Biaxially oriented, thermoformable polyester foil according to Claim 6, where the lower foil (A) has an area modulus of elasticity in the range from 4500 to 6300 N/mm$^2$, determined according to formula (I)

$$E_{area} = \sqrt{\left(E_{MD}{}^2 + E_{TD}{}^2\right)} \quad (\mathrm{I}) ,$$

where

$E_{MD}$ is the modulus of elasticity of the foil measured in longitudinal direction of the machine, and
$E_{TD}$ is the modulus of elasticity of the foil measured in transverse direction of the machine.

8. Biaxially oriented, thermoformable polyester foil as upper foil (B) for a transparent packaging comprising a base layer (B") and a heat-sealable outer layer (B'), where the heat-sealable outer layer (B') comprises at least 90 % by weight of a thermoplastic polyester composed of

a) from 85 to 97 % by weight of amorphous polyester I and

b) from 3 to 15 % by weight of semicrystalline polyester II,

c) the heat-sealable outer layer (B') comprises from 0.04 to 0.35 % by weight of inorganic and/or organic particles with a median diameter $d_{50}$ of 1.5 to 5.0 $\mu$m, where the ratio of particle size $d_{50}$ to layer thickness of the outer layer (B') is greater than 1.0,

d) the layer thickness of the outer layer (B') is from 1.5 to 4.0 $\mu$m,

e) the haze of the upper foil is below 5.0 %, determined in accordance with ASTM-D 1003-61, Method A, and its clarity is at least 85 %, determined in accordance with ASTM-D 1003,

f) its seal seam strength with respect to itself (= fin sealing) is in the range from 2 to 7 N/15 mm, determined in accordance with DIN 55529, and

g) its thickness is in the range from 20 to 125 $\mu$m.

9. Process for the production of a transparent packaging for vacuum forming according to one or more of Claims 1 to 5, **characterized by** production of the lower foil by extrusion (production of layer (A)) or coextrusion, biaxial stretching of the lower foil (A) in longitudinal direction at a temperature between 70 ° and 100 °C with a longitudinal stretching ratio of 2,2:1 to 3.8:1, and in transverse direction at a temperature between 90 ° to 140 °C with a transverse stretching ratio of 2.2:1 to 3.8:1, and heat setting for 5 to 25 s at 175 ° to 220 °C; coextrusion of the melts corresponding to the individual layers (B', B" and, if present, B''') of the upper foil (B) through a flat-film die, take-off of the resultant foil on one or more rolls for solidification, and then biaxial stretching and heat setting of the foil.

10. Use of the transparent packaging for vacuum forming according to one or more of Claims 1 to 5 as ready-meal tray, in particular for meat, fish, poultry and dry (ready-to-eat) products such as sandwiches, burgers or wraps.

## Revendications

1. Emballage transparent destiné au formage sous vide, comprenant un film de polyester thermoformable à orientation biaxiale en tant que film inférieur (A) et un film de polyester à orientation biaxiale en tant que film supérieur (B) pouvant être thermosoudé sur le film inférieur (A),
dans lequel

I. le film inférieur (A) est un film qui comprend au moins 85 % en poids d'un copolyester dont les composants acide dicarboxylique correspondent pour une part comprise entre 85 et 94 % en moles à des unités dérivées de l'acide téréphtalique et pour une part comprise entre 6 et 15 % en moles à des unités dérivées de l'acide isophtalique, dans lequel le film inférieur est produit par coextrusion, étirage biaxial du film inférieur (A) dans la direction longitudinale à une température comprise entre 70 et 100 °C avec un rapport d'étirage longitudinal compris entre 2,2:1 et 3,8:1, et dans la direction transversale à une température comprise entre 90 et 140 °C avec un rapport d'étirage transversal compris entre 2,2:1 et 3,8:1, et thermodurcissage pendant 5 à 25 s à une température comprise entre 175 °C et 220 °C, et dans lequel le film inférieur présente

a) un module d'élasticité surfacique situé dans la plage comprise entre 4 500 et 6 400 N/mm², déterminé conformément à la formule (I);

$$E_{Fläche} = \sqrt{(E_{MD}{}^2 + E_{TD}{}^2)} \text{ (I),}$$

dans lequel

$E_{MD}$ est le module d'élasticité du film, mesuré dans la direction longitudinale de la machine, et
$E_{TD}$ est le module d'élasticité du film, mesuré dans la direction transversale de la machine

b) une somme des résistances ($\sigma_5$) dans les directions longitudinale et transversale située dans la plage comprise entre 170 et 220 MPa, déterminée conformément à la norme DIN EN ISO 527-1 et -3
c) une densité inférieure à 1 390 kg/m³, déterminée conformément à la norme ASTM-D 1505-68, méthode C ;
d) une opacité inférieure à 2,0 %, déterminée conformément à la norme ASTM-D 1003-61, méthode A, et une transparence d'au moins 85 %, déterminée conformément à la norme ASTM-D 1003 ; et
e) une épaisseur située dans la plage comprise entre 50 et 300 $\mu$m;

et
II. le film supérieur (B) est un film qui contient une couche de base (B") et une couche superficielle (B') thermoscellable par rapport au film inférieur (A), dans lequel la couche superficielle thermoscellable (B') comprend au moins 90 % en poids d'un polyester thermoplastique

a) constitué pour une part comprise entre 85 et 97 % en poids de polyester amorphe I et
b) constitué pour une part comprise entre 3 et 15 % en poids de polyester partiellement cristallin II
c) la couche superficielle thermoscellable (B') contient entre 0,04 et 0,35 % en poids de particules minérales et/ou organiques présentant un diamètre moyen $d_{50}$ compris entre 1,5 et 5,0 $\mu$m, dans lequel le rapport entre taille des particules $d_{50}$ et épaisseur de la couche superficielle (B') est supérieur à 1,0
d) l'épaisseur de la couche superficielle (B') est comprise entre 1,5 et 4,0 $\mu$m;
e) le film supérieur possède une opacité inférieure à 5,0 %, déterminée conformément à la norme ASTM-D 1003-61, méthode A, et une transparence d'au moins 85 %, déterminée conformément à la norme ASTM-D 1003
f) présente une résistance de soudure de scellage par rapport à elle-même (= scellage de précision) et par rapport au film inférieur (A) qui se situe dans la plage comprise entre 2 et 7 N/15 mm, déterminée conformément à la norme DIN 55529, et
g) présente une épaisseur située dans la plage comprise entre 20 $\mu$m et 125 $\mu$m.

2. Emballage transparent destiné au formage sous vide selon la revendication 1, dans lequel le film inférieur (A) présente un module d'élasticité surfacique situé dans la plage comprise entre 4 500 et 6 300 N/mm², déterminé conformément à la formule (I)

$$E_{Fläche} = \sqrt{(E_{MD}{}^2 + E_{TD}{}^2)} \text{ (I),}$$

dans lequel

$E_{MD}$ est le module d'élasticité du film, mesuré dans la direction longitudinale de la machine, et
$E_{TD}$ est le module d'élasticité du film, mesuré dans la direction transversale de la machine.

3. Emballage transparent selon la revendication 1 ou 2, dans lequel le film inférieur (A) et/ou la couche de base (B") contien(nen)t un ou plusieurs capteur(s) de radicaux.

4. Emballage transparent selon la revendication 3, dans lequel le/les capteur(s) de radicaux est/sont choisi(s) dans le groupe des antioxydants phénoliques, de manière préférée dans le groupe comprenant le tétrakis[3-(3,5-di-tert-butyl-4-hydroxyphényl)-propionate] de pentaérythritol et le 1,3,5-triméthyl-2,4,6-tris(3,5-di-tert-butyl-4-hydroxybenzyl)-benzène.

5. Emballage transparent selon l'une quelconque ou plusieurs des revendications 1 à 4, dans lequel le film inférieur (A) et le film supérieur (B) sont exempts d'antimoine.

6. Film de polyester thermoformable à orientation biaxiale en tant que film inférieur (A) pour un emballage transparent, comprenant au moins 85 % en poids d'un copolyester dont les composants acide dicarboxylique correspondent pour une part comprise entre 85 et 94 % en moles à des unités dérivées de l'acide téréphtalique et pour une part comprise entre 6 et 15 % en moles à des unités dérivées de l'acide isophtalique, dans lequel le film inférieur est produit par coextrusion, étirage biaxial du film inférieur (A) dans la direction longitudinale à une température comprise entre 70 et 100 °C avec un rapport d'étirage longitudinal compris entre 2,2:1 et 3,8:1, et dans la direction transversale à une température comprise entre 90 et 140 °C avec un rapport d'étirage transversal compris entre 2,2:1 et 3,8:1, et thermodurcissage pendant 5 à 25 s à une température comprise entre 175 et 220 °C, et dans lequel le film inférieur présente

a) un module d'élasticité surfacique situé dans la plage comprise entre 4 500 et 6 400 N/mm2, déterminé conformément à la formule (I);

$$E_{Fläche} = \sqrt{(E_{MD}{}^2 + E_{TD}{}^2)}\ (I),$$

dans lequel

$E_{MD}$ est le module d'élasticité du film, mesuré dans la direction longitudinale de la machine, et
$E_{TD}$ est le module d'élasticité du film, mesuré dans la direction transversale de la machine

b) une somme des résistances ($\sigma 5$) dans les directions longitudinale et transversale située dans la plage comprise entre 170 et 220 MPa, déterminée conformément à la norme DIN EN ISO 527-1 et -3
c) une densité inférieure à 1 390 kg/m$^3$, déterminée conformément à la norme ASTM-D 1505-68, méthode C ;
d) une opacité inférieure à 2,0 %, déterminée conformément à la norme ASTM-D 1003-61, méthode A, et une transparence d'au moins 85 %, déterminée conformément à la norme ASTM-D 1003 ; et
e) une épaisseur située dans la plage comprise entre 50 et 300 $\mu$m.

7. Film de polyester thermoformable à orientation biaxiale selon la revendication 6, dans lequel le film inférieur (A) présente
un module d'élasticité surfacique situé dans la plage comprise entre 4 500 et 6 300 N/mm$^2$, déterminé conformément à la formule (I)

$$E_{Fläche} = \sqrt{(E_{MD}{}^2 + E_{TD}{}^2)}\ (I),$$

dans lequel

$E_{MD}$ est le module d'élasticité du film, mesuré dans la direction longitudinale de la machine, et
$E_{TD}$ est le module d'élasticité du film, mesuré dans la direction transversale de la machine.

8. Film de polyester thermoformable à orientation biaxiale en tant que film supérieur (B) pour un emballage transparent comprenant une couche de base (B") et une couche superficielle thermoscellable (B'), dans lequel la couche superficielle thermoscellable (B') comprend au moins 90 % en poids d'un polyester thermoplastique

a) constitué pour une part comprise entre 85 et 97 % en poids de polyester amorphe I et
b) constitué pour une part comprise entre 3 et 15 % en poids de polyester partiellement cristallin II
c) la couche superficielle thermoscellable (B') contient entre 0,04 et 0,35 % en poids de particules minérales et/ou organiques présentant un diamètre moyen $d_{50}$ compris entre 1,5 et 5,0 $\mu$m, dans lequel le rapport entre taille des particules $d_{50}$ et épaisseur de la couche superficielle (B') est supérieur à 1,0
d) l'épaisseur de la couche superficielle (B') est comprise entre 1,5 et 4,0 $\mu$m
e) le film extérieur possède une opacité inférieure à 5,0 %, déterminée conformément à la norme ASTM-D 1003-61, méthode A, et une transparence d'au moins 85 %, déterminée conformément à la norme ASTM-D 1003 ;

f) présente une résistance de soudure de scellage par rapport à elle-même (= scellage de précision) située dans la plage comprise entre 2 et 7 N/15 mm, déterminée conformément à la norme DIN 55529, et

g) présente une épaisseur située dans la plage comprise entre 20 et 125 $\mu$m.

**9.** Procédé de fabrication d'un emballage transparent destiné au formage sous vide selon l'une quelconque ou plusieurs des revendications 1 à 5, **caractérisé par** les étapes consistant à

produire le film inférieur par extrusion (production de la couche (A)) ou coextrusion, étirage biaxial du film inférieur (A) dans la direction longitudinale à une température comprise entre 70 °C et 100 °C avec un rapport d'étirage longitudinal compris entre 2,2:1 et 3,8:1, et dans la direction transversale à une température comprise entre 90 °C et 140 °C avec un rapport d'étirage transversal compris entre 2,2:1 et 3,8:1, et thermodurcissage pendant 5 à 25 s à une température comprise entre 175 °C et 220 °C ;

coextrusion des masses fondues correspondant aux couches individuelles (B'B" et, le cas échéant, B‴) du film supérieur (B) à travers une filière plate, extraction du film ainsi obtenu sur un ou plusieurs rouleau(x) en vue d'une solidification, puis étirage biaxial et thermofixation du film.

**10.** Utilisation de l'emballage transparent pour le formage sous vide selon l'une quelconque ou plusieurs des revendications 1 à 5 sous forme de plateau-repas, en particulier pour la viande, le poisson, la volaille et les produits secs (transformés) tels que les sandwichs, les hamburgers ou les wraps.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1697129 B1
- US 2005287382 A1
- EP 1945512 B1
- EP 0415383 A
- EP 1697129 A
- EP 2810776 A1
- EP 1475228 B1

**In der Beschreibung aufgeführte Nicht-Patentliteratur**

- *CHEMICAL ABSTRACTS,* 6683-19-8
- *CHEMICAL ABSTRACTS,* 1709-70-2